(19) Europäisches Patentamt / European Patent Office / Office européen des brevets

(11) **EP 2 092 001 B1**

(12) **EUROPÄISCHE PATENTSCHRIFT**

(45) Veröffentlichungstag und Bekanntmachung des Hinweises auf die Patenterteilung:
**02.07.2014 Patentblatt 2014/27**

(21) Anmeldenummer: **07818350.6**

(22) Anmeldetag: **22.09.2007**

(51) Int Cl.:
*B05D 7/00* (2006.01)     *C09D 5/36* (2006.01)
*C08K 3/22* (2006.01)     *C08K 9/04* (2006.01)
*C08J 7/04* (2006.01)     *C09D 123/00* (2006.01)
*C09D 7/12* (2006.01)

(86) Internationale Anmeldenummer:
**PCT/EP2007/008262**

(87) Internationale Veröffentlichungsnummer:
**WO 2008/058590 (22.05.2008 Gazette 2008/21)**

(54) **LÖSEMITTELHALTIGE, PIGMENTIERTE BESCHICHTUNGSMITTEL UND IHRE VERWENDUNG ZUR HERSTELLUNG VON MEHRSCHICHTLACKIERUNGEN SOWIE VERFAHREN ZUR VERBESSERUNG DES FLOPS VON EFFEKTGEBENDEN LACKIERUNGEN**

SOLVENT-CONTAINING PIGMENTED COATING COMPOSITIONS AND USE THEREOF FOR PRODUCING MULTICOAT PAINT SYSTEMS AND PROCESS FOR IMPROVING THE FLOP OF EFFECT PAINT SYSTEMS

AGENT DE REVÊTEMENT PIGMENTÉ ET CONTENANT UN SOLVANT, SON UTILISATION POUR LA FABRICATION DE REVÊTEMENTS MULTICOUCHES ET PROCÉDÉ D'AMÉLIORATION DU FLOP DE REVÊTEMENTS À EFFET

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **15.11.2006 DE 102006053776**

(43) Veröffentlichungstag der Anmeldung:
**26.08.2009 Patentblatt 2009/35**

(73) Patentinhaber: **BASF Coatings GmbH**
**48165 Münster (DE)**

(72) Erfinder:
• **JANSING, Frank**
**97941 Tauberbischofsheim (DE)**

• **WEGNER, Egon**
**48268 Greven (DE)**
• **LÖW, Norbert**
**91413 Neustadt/Aisch (DE)**

(74) Vertreter: **Leifert & Steffan**
**Patentanwälte**
**Burgplatz 21-22**
**40213 Düsseldorf (DE)**

(56) Entgegenhaltungen:
**EP-A- 0 687 715     US-A- 4 680 204**
**US-B1- 6 770 373**

## Beschreibung

### Gebiet der Erfindung

Die vorliegende Erfindung betrifft lösemittelhaltige, pigmentierte Beschichtungsmittel und ihre Verwendung zur Herstellung von Mehrschichtlackierungen.

### Stand der Technik

Die seit langem bekannten lösemittelhaltigen Beschichtungsstoffe, insbesondere die sogenannten Basislacke, und die hiermit hergestellten ein- oder mehrschichtigen farb- und/oder effektgebenden Lackierungen weisen sehr gute anwendungstechnische Eigenschaften auf.

Die stetig wachsenden technischen und ästhetischen Ansprüche des Marktes, insbesondere die Ansprüche der Automobilhersteller und ihrer Kunden, erfordern aber eine stetige Weiterentwicklung des bisher erreichten technischen und ästhetischen Niveaus.

Insbesondere müssen neue Beschichtungsmittel zur Verfügung gestellt werden, die es gestatten, Basislackierungen herzustellen, die ein besonders stark ausgeprägtes Hell-Dunkel-Verhalten (metallischer Flop) aufweisen. Dabei sollen aber die durch die bekannten Basislacke und die hieraus hergestellten Basislackierungen erzielten Vorteile nicht verloren gehen, sondern zumindest in der gleichen, vorzugsweise einer stärkeren, Ausprägung erhalten bleiben.

Aus Gründen des Umweltschutzes müssen ferner Beschichtungsmittel mit einem immer niedrigeren Lösemittelgehalt und somit einem immer höheren Festkörpergehalt zur Verfügung gestellt werden. Üblicherweise führt jedoch die Erniedrigung des Lösemittelgehaltes zu einer Verschlechterung insbesondere der optischen Eigenschaften der erhaltenen Lackierung, vor allem zu einer Verschlechterung des Flops.

In der Literatur wird daher empfohlen, den Beschichtungsmitteln bei Erhöhung des Festkörpergehaltes Celluloseacetobutyrate und/oder Additive, die Aluminiumpigmente fixieren, wie beispielsweise Wachsdispersionen, zuzugeben, um den Flop zu verbessern. Dies kann allerdings zum Auftreten von optischen Fehlstellen, wie z.B. Schleifflecken führen. Um außerdem bei Verwendung von Beschichtungsmitteln mit einem hohen Festkörpergehalt bei Spritzviskosität Beschichtungen zu erhalten, die einen besonders ausgeprägten metallischen Flop aufweisen, müssen den Beschichtungsmitteln recht hohe Mengen an Wachsdispersion zugesetzt werden. Dies wiederum führt aber zum sogenannten Mudcracking, also Rissbildungen in der pigmentierten Basislackschicht.

Aus der US-A-4,522,958 sind nun lösemittelhaltige Basislacke mit einem hohen Festkörpergehalt bekannt, die anorganische Teilchen mit einer Teilchengröße von 1 bis 150 nm enthalten. Diese anorganischen Teilchen werden an ihrer Oberfläche mit chemisch gebundenen, Kohlenstoff enthaltenden Molekülen modifiziert, wodurch die anorganischen Teilchen im Wesentlichen hydrophob und organophil werden. Insbesondere werden Organosole eingesetzt, bei denen die Teilchen in einem alkoholischen Medium dispergiert sind. Daneben werden aber auch anorganische Teilchen beschrieben, bei denen die Oberfläche des Siliciumdioxids mit Alkylchlorosilanen modifiziert wurde, um die Teilchen mit dem organischen Lösemittel kompatibel zu machen. Diese modifizierten anorganischen Teilchen sollen gemäß US-A-4,522,958 in den pigmentierten Beschichtungsmitteln zu einer Verbesserung des Metalleffektes führen, ohne den Glanz und die Lagerstabilität der resultierenden Beschichtungen zu verschlechtern.

Die in der US-A-4,522,958 beschriebenen Beschichtungsmittel können außer den modifizierten anorganischen Teilchen noch übliche Bindemittel, ggf. Vernetzungsmittel, organische Lösemittel, Pigmente sowie übliche Hilfs- und Zusatzstoffe, wie Katalysatoren, Verlaufsmittel, oberflächenaktive Substanzen, Mikroteilchen u.ä. enthalten.

Nachteilig bei den aus der US-A-4,522,958 bekannten Beschichtungsmitteln ist jedoch, dass die resultierenden Beschichtungen mit einem ausreichenden Flop einen nur unzureichenden Haze (Glanzschleier) und Verlauf bzw. bei einem ausreichenden Haze einen unzureichenden Flop aufweisen. Außerdem weisen die aus der US-A-4,522,958 bekannten Beschichtungsmittel oft noch eine verbesserungsbedürftige Haftung zum Klarlack auf. Schließlich führt der Einsatz der zur Verbesserung des Flops erforderlichen hohen Mengen an anorganischen Teilchen nach Lagerung der Beschichtungsmittel im Allgemeinen zu einer Viskositätserhöhung der Beschichtungsmittel, so dass zur Einstellung der erforderlichen Spritzviskosität weiteres Lösemittel zugegeben werden muß, was aber gerade vermieden werden sollte.

Außerdem sind aus der US-A-4,677,004, der US-A-4,652,470 und der US-A-4,680,204 lösemittelhaltige Basislacke mit einem hohen Festkörpergehalt bekannt, die anorganische Teilchen mit einer Teilchengröße von 1 bis 150 nm enthalten. Diese anorganischen Teilchen können ggf. oberflächenmodifiziert sein, um die Kompatibilität der Teilchen mit den filmbildenden Harzen oder dem Lösemittel zu verbessern. Hierzu werden die Teilchen in einem alkoholischen Medium bzw. in einem Polyalkohol dispergiert und zumindest ein Teil der Oberfläche der anorganischen Teilchen ist mit diesem Alkohol bzw. Polyalkohol modifiziert. Durch den Zusatz der anorganischen Teilchen weisen die resultierenden Basislacke insbesondere ein verbessertes Ablaufverhalten an nichthorizontalen Flächen sowie eine verbesserte Resistenz gegen Anlösen durch den Klarlack ("strike-in") auf. Außerdem soll durch den Zusatz der anorganischen Teilchen der Metalleffekt verbessert werden.

Diese aus der US-A-4,677,004, der US-A-4,652,470 und der US-A-4,680,204 bekannten Basislackbeschichtungen weisen jedoch eine unzureichende Lagerstabilität und häufig eine Stippenbildung auf. Außerdem weisen die resultierenden Beschichtungen mit einem ausreichenden Flop einen nur unzureichenden Haze (Glanzschleier) und Verlauf bzw. bei einem ausreichenden Haze einen unzureichenden Flop auf.

Weiterhin sind aus der EP-B-1 204 701 gehärtete Beschichtungen mit einer verbesserten Kratzfestigkeit bekannt, die wenigstens ein oberflächenaktives Mittel und eine Vielzahl von Teilchen enthalten, wobei die Konzentration der Teilchen innerhalb einer Oberflächenregion der Beschichtung größer ist als eine Konzentration der Teilchen innerhalb eines Volumenbereichs der Beschichtung. Die Beschichtungen können auch pigmentiert sein. Allerdings wird in der EP-B-1 204 701 nicht beschrieben, wie der metallische Flop von pigmentierten Beschichtungen verbessert werden kann.

Darüber hinaus werden in der EP-A-0 687 715 wässrige Primer beschrieben, welche unter anderem Bindemittel, Siliciumdioxidpartikel, Gleitmittel und Pigmente enthalten. Die Partikel werden beispielsweise mit Octylsilan oder Polydimethylsiloxan modifiziert.

Schließlich sind aus der DE-A-101 29 899 lösemittelhaltige, pigmentierte Beschichtungsmittel bekannt, die neben Bindemitteln und Pigmenten als wesentlichen Bestandteil mindestens ein farbloses, gegenüber den übrigen Bestandteilen im Wesentlichen inertes, transparentes oder opakes Pulver mit einer mittleren Teilchengröße von 1,0 bis 10,0 $\mu$m, dessen Partikel eine Dichte von 0,8 bis 3,6 gcm$^{-3}$ aufweisen, enthalten und die dadurch zu Beschichtungen mit einer deutlich verringerten Wolkenbildung führen.

Diese in der DE-A-101 29 899 beschriebenen Beschichtungsmittel weisen jedoch einen recht hohen Anteil an organischen Lösemitteln auf, der aus Gründen des Umweltschutzes zunehmend unerwünscht ist.

Verbesserungsbedürftig ist außerdem der metallische Flop der resultierenden Beschichtungen.

Die DE-A-101 29 899 enthält aber keine Angaben, wie der metallische Flop der Basislackierungen verbessert werden kann und die Basislackierungen dabei gleichzeitig einen sehr guten optischen Gesamteindruck (Appearance) aufweisen und frei sind von Lackstörungen, wie z.B. von Rissbildung in der Basislackierung bei nachfolgender Klarlacklackierung.

Die in der DE-A-101 29 899 beschriebenen Beschichtungsmittel können als Additiv noch zusätzlich Nanopartikel, insbesondere hydrophile Nanopartikel, mit einer Primärpartikelgröße kleiner 50 nm enthalten. Angaben, ob die Nanopartikel modifiziert werden müssen oder für welchen Zweck sie eingesetzt werden, finden sich in der DE-A-101 29 899 jedoch nicht.

**Aufgabe**

Der vorliegenden Erfindung lag daher die Aufgabe zugrunde, pigmentierte Beschichtungsmittel zur Verfügung zu stellen, die es gestatten, Basislackierungen herzustellen, die ein besonders stark ausgeprägtes Hell-Dunkel-Verhalten (metallischer Flop) aufweisen. Insbesondere soll dies auch bei Beschichtungsmitteln mit einem höheren Festkörpergehalt bei Spritzviskosität gewährleistet werden. Dabei sollen aber die durch die bekannten Basislacke und die hieraus hergestellten Basislackierungen erzielten Vorteile nicht verloren gehen, sondern zumindest in der gleichen, vorzugsweise einer stärkeren, Ausprägung erhalten bleiben.

Die entsprechenden farb- und/oder effektgebenden Basislackierungen sollen daher insbesondere einen guten Haze, d.h. keinen Glanzschleier, einen guten Verlauf sowie einen sehr guten optischen Gesamteindruck (Appearance) aufweisen. Ferner sollen die Basislackierungen frei von Lackstörungen, wie Rissbildungen (Mudcracking), Hell-Dunkel-Schattierungen (Wolken) und Stippen, sein. Darüber hinaus sollen die resultierenden Beschichtungen keine optischen Fehlstellen, wie z.B. Schleifflecken, zeigen und eine zufriedenstellende Haftung zum Klarlack aufweisen.

Außerdem sollen die Beschichtungsmittel eine gute Lagerstabilität aufweisen, d.h. dass auch bei Lagerung der Beschichtungsmittel bei 40 °C von 28 Tagen keine signifikante Verschlechterung der Eigenschaften sowohl der Beschichtungsmittel als auch der aus diesen gelagerten Beschichtungsmitteln hergestellten Beschichtungen auftritt. So soll keine Verschlechterung der rheologischen Eigenschaften der Beschichtungsmittel, insbesondere kein Viskositätsanstieg, und keine Stippenbildung und keine Verschlechterung des Flops auftreten.

**Lösung der Aufgabe**

Diese Aufgabe wird überraschenderweise durch ein pigmentiertes Beschichtungsmittel (P) gelöst, das

(N) ein oder mehrere anorganische Teilchen (N), welche eine Teilchengröße von 1 bis 800 nm, bevorzugt von ,3 bis 250 nm und besonders bevorzugt von 4 bis 100 nm, aufweisen,

(B) ein oder mehrere Bindemittel (B),

(D) ein oder mehrere effektgebende Pigmente,

(E) ein oder mehrere organische Lösemittel (E) und

(V) ggf. ein oder mehrere Vernetzungsmittel (V), enthält,

wobei die anorganischen Teilchen (N) zumindest teilweise mit einem Stabilisator (S) modifiziert sind, der mindestens eine Gruppe (S1), die mit der Oberfläche der anorganischen Teilchen (N) in Wechselwirkung treten kann, und eine oder mehrere hydrophobe Teilstrukturen aufweist, dadurch gekennzeichnet, dass das Beschichtungsmittel (P) zusätzlich mindestens ein Wachs und/oder eine wachsartige Verbindung (W) enthält.

Gegenstand der vorliegenden Erfindung ist außerdem ein Verfahren zur Herstellung der Lackierungen unter Einsatz dieser pigmentierten Beschichtungsmittel sowie die Verwendung der Lackierungen.

**Vorteile der Erfindung**

Es ist überraschend und war nicht vorhersehbar, dass durch die erfindungsgemäße Verwendung der Kombination aus (I) einem oder mehreren anorganischen Teilchen (N), die zumindest teilweise mit dem Stabilisator (S) modifiziert sind, und (II) mindestens einem Wachs und/oder mindestens einer wachsartigen Verbindung (W) pigmentierte Beschichtungsmittel zur Verfügung gestellt werden können, die auch bei einem hohen Festkörpergehalt bei Spritzviskosität einen sehr guten Flop aufweisen, ohne dass die durch die bekannten Basislacke und die hieraus hergestellten Basislackierungen erzielten Vorteile verloren gehen, sondern zumindest in der gleichen, vorzugsweise einer stärkeren, Ausprägung erhalten bleiben.

Die erfindungsgemäßen Mehrschichtlackierungen weisen daher auch einen guten Haze, d.h. keinen Glanzschleier, einen guten Verlauf sowie einen sehr guten optischen Gesamteindruck (Appearance) auf. Ferner sind die Basislackierungen frei von Lackstörungen, wie Rissbildungen (Mudcracking), Hell-Dunkel-Schattierungen (Wolken) und Stippen, und zeigen keine Schleifflecken.

Außerdem weisen die Beschichtungsmittel eine gute Lagerstabilität auf, d.h. dass auch bei Lagerung der Beschichtungsmittel bei 40 °C von 28 Tagen keine signifikante Verschlechterung der Eigenschaften sowohl der Beschichtungsmittel als auch der aus diesen gelagerten Beschichtungsmitteln hergestellten Beschichtungen, insbesondere keine Verschlechterung der rheologischen Eigenschaften der Beschichtungsmittel und keine Verschlechterung des Flops der resultierenden Beschichtungen auftritt.

Schließlich erfüllen die erfindungsgemäßen Mehrschichtlackierungen die üblicherweise an eine Automobillackierung gestellten Anforderungen, weisen also insbesondere die geforderte Klarlackhaftung auf.

**Ausführliche Beschreibung der Erfindung**

**Pigmentiertes Beschichtungsmittel (P)**

**Anorganische Teilchen (N)**

Die pigmentierten Beschichtungsmittel enthalten als erfindungswesentlichen Bestandteil ein oder mehrere anorganische Teilchen (N), welches bzw. welche eine Teilchengröße von 1 bis 800 nm, bevorzugt von 3 bis 250 nm, besonders bevorzugt von 4 bis 100 nm, aufweisen. Diese Teilchengröße bezieht sich in der Regel auf die Größe der dispergierten Teilchen (N) vor Einarbeitung in das Beschichtungsmittel (P).

Bevorzugt weisen das bzw. die anorganischen Teilchen (N) eine Primärteilchengröße von 3 bis 200 nm, insbesondere von 3 bis 30 nm, auf.

Die in den erfindungsgemäßen Beschichtungsmitteln eingesetzten anorganischen Teilchen (N) sind üblicherweise im Wesentlichen farblos, insbesondere um nicht den Farbton des Beschichtungsmittels zu beeinflussen.

Die anorganischen Teilchen (N) können als separate Teilchen oder in Form von Agglomeraten vorliegen, wobei aber bevorzugt separate Teilchen eingesetzt werden. Insbesondere sollten die anorganischen Teilchen (N) vor allem leicht und stabil in das pigmentierte Beschichtungsmittel einzuarbeiten sein, um den gewünschten Einsatz des pigmentierten Beschichtungsmittels zu gewährleisten. Die anorganischen Teilchen (N) sollten daher entweder über längere Zeit (im Bereich der Automobillackierung beispielsweise über einen Zeitraum von bis zu 12 Monaten bei Lagerung von Temperaturen von bis zu 30 °C) stabil dispergiert bleiben oder aber leicht mit üblichen Mitteln der Farbmischung, wie z.B. mit Hilfe von Rührern, redispergierbar sein.

Bevorzugt werden anorganische Teilchen (N) eingesetzt, die eine Dichte von 0,8 bis 4,5 $gcm^{-3}$ aufweisen.

Die anorganischen Teilchen (N) werden üblicherweise ausgewählt aus der Gruppe der Verbindungen der Haupt- und Nebengruppen-Metalle, bevorzugt der Metallen der dritten bis fünften Hauptgruppe, der dritten bis sechsten sowie der ersten und zweiten Nebengruppe des Periodensystems der Elemente sowie den Lanthaniden, insbesondere Verbindungen von Bor, Aluminium, Gallium, Silicium, Barium, Germanium, Zinn, Arsen, Antimon, Silber, Zink, Titan, Zirkonium, Hafnium, Vanadium, Niob, Tantal, Molybdän, Wolfram und Cer, insbesondere Aluminium, Silizium, Barium, Silber, Cer, Titan und Zirkonium.

Vorzugsweise handelt es sich bei den Verbindungen der Metalle um die Oxide, Oxidhydrate, Sulfate oder Phosphate.

Geeignete anorganische Teilchen (N) werden bevorzugt ausgewählt aus der Gruppe bestehend aus hydrophilen und hydrophoben, insbesondere hydrophilen, Teilchen auf der Basis von Siliciumdioxid, Aluminiumoxid, Zinkoxid, Zirkoniumoxid, Bariumsulfat und der Polysäuren und Heteropolysäuren von Übergangsmetallen, vorzugsweise von Molybdän und Wolfram. Besonders bevorzugt werden Teilchen auf der Basis von Siliciumdioxid und/oder Aluminiumoxid verwendet, insbesondere pyrogenes oder kolloidales Siliciumdioxid.

Ganz besonders bevorzugt werden hydrophile pyrogene Siliciumdioxide verwendet, deren Agglomerate und Aggregate eine kettenförmige Struktur haben und die durch die Flammenhydrolyse von Siliziumtetrachlorid in einer Knallgasflamme herstellbar sind. Diese werden beispielweise von der Firma Degussa unter der Marke Aerosil ® vertrieben.

Als anorganische Teilchen (N) können aber auch sogenannte Sole, insbesondere Organosole, eingesetzt werden. Derartige Sole sind beispielsweise in der US-A-4,522,958, Spalte 7, Zeile 26, bis Spalte 11, Zeile 14, beschrieben. Insbesondere sind hier Sole auf Basis von Kieselsäure zu nennen, bei denen die anorganischen Teilchen in-situ gebildet und während und/oder nach ihrer Bildung mit dem Stabilisator (S) modifiziert werden. Die Teilchen können dabei mittels einer Vielzahl verschiedener, dem Fachmann bekannter Techniken hergestellt werden.

Erfindungsgemäß ist es von Vorteil, wenn die anorganischen Teilchen (N) als Pasten eingearbeitet werden. Weitere Vorteile resultieren, wenn als Pastenharze oder Reibharze die im erfindungsgemäßen Beschichtungsstoff enthaltenen, unten beschriebenen Bindemittel (B) verwendet werden. Insbesondere werden als Pastenharze oder Reibharze für die Teilchen (N) Bindemittel verwendet, die auch zum Anreiben der Pigmente verwendet werden.

Bevorzugt werden die Teilchen (N) in einer Menge von 0,2 bis 2,0 Gew.-%, besonders bevorzugt von 0,5 bis 1,5 Gew. - %, jeweils bezogen auf das Gesamtgewicht des pigmentierten Beschichtungsmittels und bezogen auf den Festkörpergehalt dieser Komponente (N) ohne den Stabilisator (S) eingesetzt.

**Stabilisator (S)**

Es ist erfindungswesentlich, dass die anorganischen Teilchen (N) zumindest teilweise mit einem Stabilisator (S) modifiziert sind, der mindestens eine Gruppe (S1), die mit der Oberfläche der anorganischen Teilchen (N) in Wechselwirkung treten kann, und eine oder mehrere hydrophobe Teilstrukturen aufweist, enthält.

Der Stabilisator (S) kann über die Gruppen (S1) mit den anorganischen Teilchen (N) in Wechselwirkung treten. Dabei ist es möglich, dass der Stabilisator mit den anorganischen Teilchen nur über physikalische Kräfte in Wechselwirkung tritt, es kann aber auch zumindest teilweise eine chemische Reaktion zwischen den Gruppen (S1) und den an der Oberfläche der anorganischen Teilchen üblicherweise befindlichen funktionellen Gruppen stattfinden. So haben insbesondere die hydrophilen anorganischen Teilchen an ihrer Oberfläche Hydroxylgruppen (z.B. bei den $SiO_2$ Typen in Form von SiOH-Gruppen), die sowohl chemisch als auch über physikalische Wechselwirkungen, wie z.B. Wasserstoffbrücken, mit den Gruppen (S1) in Wechselwirkung treten können.

Bevorzugt sind die Gruppen (S1) des Stabilisators ausgewählt aus der Gruppe Hydroxyl-, Carboxyl-, Ether-, Phosphat-, Phosphonat-, Bisphosphonat, Sulfat- oder Sulfonatgruppen oder stickstoffhaltiger, hydrophiler Gruppen oder Mischungen davon. Besonders bevorzugt sind Stabilisatoren (S), die sowohl Hydroxyl- als auch Carboxlgruppen enthalten. Weiterhin besonders bevorzugt sind Stabilisatoren (S), die sowohl Hydroxylgruppen als auch Carboxlgruppen als auch Ethergruppen enthalten. Insbesondere werden Stabilisatoren (S) eingesetzt, die eine Hydroxylzahl von 10 bis 150 mg KOH/g und eine Säurezahl von 2 bis 50 mg KOH/g aufweisen, jeweils bezogen auf den Festkörper des Stabilisators (S).

Ferner ist es erfindungswesentlich, dass der Stabilisator (S) auch noch eine oder mehrere hydrophobe Teilstrukturen aufweist. Diese hydrophoben Reste können in Wechselwirkung mit den organischen Bestandteilen des Beschichtungsmittels, insbesondere mit dem Lösemittel, den Bindemitteln und der Verbindung (W), treten.

Der Stabilisator (S) kann also insbesondere ein oder mehrere organische Reste (R1), der bzw. die hydrophobe Teilstrukturen aufweisen, enthalten. Darüber hinaus kann bzw. können der bzw. die organische Reste (R1) ggf. noch hydrophile Teilstrukturen aufweisen und/oder die Gruppen (S1) können zumindest teilweise oder vollständig an diese organischen Reste (R1) gebunden sein.

Es ist bevorzugt, dass die hydrophoben Teilstrukturen des Stabilisators (S) zumindest teilweise ausgewählt sind aus der Gruppe der Alkyl- oder Alkenylgruppen, insbesondere Alkyl- oder Alkenylgruppen mit 5 bis 50 C-Atomen.

Besonders bevorzugt werden als hydrophobe Teilstrukturen die Reste von gesättigten und/oder ungesättigten Fettsäuren eingesetzt, insbesondere von gesättigten und/oder ungesättigten Fettsäuren mit 5 bis 30 Kohlenstoffatomen im Molekül, wie z.B. Reste der Valeriansäure, Capronsäure, der Önanthsäure, Caprylsäure, Perlagonsäure, Caprinsäure, Undecylsäure, Laurinsäure, Myristinsäure, Palmitinsäure, Stearinsäure, Ölsäure, Elaidinsäure, Arachinsäure, Behensäure, Lignocerinsäure, Cerotinsäure, Melissinsäure, Linolsäure, Ricinensäure, Ricinolsäure, Linolensäure, Arachidonsäure, Clupanodonsäure, alpha-Elaeostearinsäure, alpha-Licansäure, alpha-Parinarsäure, Ricinolsäure und Isanolsäure und Mischungen dieser Fettsäuren und/oder die entsprechenden Hydroxysäuren der genannten Fettsäuren bzw. deren Mischungen. Ganz besonders bevorzugt werden Stabilisatoren eingesetzt, die Reste der Hydroxyvaleriansäure, Hydroxycapronsäure, Hydroxystearinsäure, Hydroxylaurinsäure, Ricinolsäure oder deren Mischungen enthalten.

Geeignet sind ferner auch die entsprechenden Reste von Dimer- und Trimerfettsäuren sowie deren Mischungen und die Reste der entsprechenden Mischungen der Dimer- und/oder Trimerfettsäuren mit den genannten Fettsäuren.

Ganz besonders bevorzugt werden als Stabilisator (S) Ester der genannen (Hydroxy)Fettsäuren/Dimerfettsäuren/Trimerfettsäuren, eingesetzt, insbesondere Ester mit Polyalkylenglykolen, besonders bevorzugt Ester mit Polyalkylenglykolen mit 6 bis 20 C-Atomen, wie Diethylenglykol, Triethylenglykol, Tetraethylenglykol, Dipropylenglykol, Tripropylenglykol und Mischungen davon. Hier sind insbesondere Ester von Hydroxyvaleriansäure, Hydroxycapronsäure und Hydroxystearinsäure mit Triethylenglykol, Tetraethylenglykol und Mischungen dieser Hydroxylverbindungen, dieser Ester und Mischungen der Ester mit den Säuren zu nennen.

Als Stabilisator (S) geeignet sind beispielsweise auch die entsprechenden handelsüblichen Verbindungen, sofern sie die erforderliche Struktur aufweisen. Geeignet sind daher beispielsweise die im Handel unter den Bezeichnungen Solsperse® der Firma Avecia GmbH, insbesondere Solsperse® 39000, Dispers® der Firma Th. Goldschmidt, insbesondere Dispers® 652, und entsprechende Additive der Firma Degussa.

Der Stabilisator (S) wird üblicherweise in einer Menge von 3,0 bis 40,0 Gew.- %, insbesondere von 5,0 bis 20,0 Gew.- %, ganz besonders bevorzugt von 8,0 bis 12,0 Gew.- %, jeweils bezogen auf das Gewicht der eingesetzten Teilchen (N) und jeweils bezogen auf den Festkörpergehalt des Stabilisators (S) und der Teilchen (N), eingesetzt.

Die Modifizierung der anorganischen Teilchen (N) mit dem Stabilisator (S) gewährleistet u.a., dass auch bei Lagerung bei 40 °C von 28 Tagen keine signifikante Verschlechterung der Eigenschaften sowohl der Beschichtungsmittel als auch der aus diesen gelagerten Beschichtungsmitteln hergestellten Beschichtungen, insbesondere keine Verschlechterung der rheologischen Eigenschaften der Beschichtungsmittel und keine Verschlechterung des Flops der resultierenden Beschichtungen, auftritt.

**Verbindung (W)**

Es ist außerdem erfindungswesentlich, dass die pigmentierten Beschichtungsmittel zusätzlich ein oder mehrere Wachse und/oder eine oder mehrere wachsartige Verbindungen (W) enthalten.

Im Zusammenhang mit der vorliegenden Erfindung werden unter "Wachs" und "wachsartiger Verbindung" alle natürlichen und künstlich gewonnenen Stoffe verstanden, die folgende Eigenschaften aufweisen:

1. Bei 20°C knetbar, fest bis brüchig hart.

2. Grob- bis feinkristallin, durchscheinend bis opak, jedoch nicht glasartig.

3. Über 40°C ohne Zersetzung schmelzend.

4. Schon wenig oberhalb des Schmelzpunktes verhältnismäßig niedrigviskos.

5. Stark temperaturabhängig in Konsistenz und Löslichkeit.

6. Unter leichtem Druck polierbar.

Erfüllt ein Stoff mehr als eine dieser Eigenschaften nicht, ist er kein "Wachs" mehr im Sinne dieser Erfindung (vgl. Ullmanns Enzyklopädie der technischen Chemie; 4. neubearbeitete und erweiterte Auflage; Verlag Chemie; Weinheim; Deerfield Beach, Florida; Basel, 1983, Seite 3).

Die Wachse oder wachsartigen Verbindungen (W) können modifiziert und/oder unmodifiziert sein. Geeignet sind alle an sich bekannten und üblichen Wachse, wobei aber bevorzugt synthetische Wachse eingesetzt werden.

Beispiele für natürliche Wachse sind pflanzliche Wachse, wie Carnaubawachs, Candelillawachs, Espartowachs, Guarumawachs, Japanwachs, Korkwachs, Montanwachs, Ouricurywachs, Reiskeimölwachs, Zuckerrohrwachs, tierische Wachse, wie Bienenwacs, Bürzeldrüsenfett, Wollwachs, Schellackwachs, Walrat, und Mineralwachse, wie Ceresin und Ozokerit.

Beispiele für chemisch modifizierte Wachse sind hydrierte Jojobawachse, Montanesterwachse und Sasolwachse.

Geeignet sind beispielsweise auch modifizierte und unmodifizierte Polyolefinwachse, wie Polyethylen- und Polypropylenwachse, Polyethylenglykolwachse und Polyamidwachse. Geeignet sind außerdem auch Polyacrylatpolymerisate und Polyacrylatcopolymerisate, die wie Wachs eine ausgeprägte Temperaturabhängigkeit der Löslichkeit in organischen Lösemitteln zeigen.

Die Wachse bzw. die Polyacrylatpolymerisate und Polyacrylatcopolymerisate haben gewöhnlich ein zahlenmittleres Molekulargewicht zwischen 300 und 20.000, bevorzugt zwischen 1000 und 10.000 und vorzugsweise Tropfpunkte zwischen 70 und 180 °C.

Die Polyethylen- und Polypropylenwachse sind entweder Homo- oder Copolymere mit üblicherweise 0,5 bis 40 Gew.- % Comonomereinheiten, die sich von gesättigten oder ungesättigten Monocarbonsäuren oder deren Amiden oder Estern herleiten. Beispiele solcher Comonomereinheiten sind u.a. die Reste von Acrylsäure, Methacrylsäure, Maleinsäure, Fumarsäure, Acrylamid, Stearinsäure oder Stearinsäureamid oder Vinnylacetat. Die Polyolefinwachse sind im Handel unter vielfältigen Bezeichnungen erhältlich.

Als Polyamidwachse kommen alle üblicherweise in Beschichtungsmitteln eingesetzten Polyamidwachse, beispielsweise fettsäurehaltige Polyamidwachse, die im Handel beispielsweise unter dem Namen Disparlon erhältlich sind, in Frage.

Geeignet sind außerdem wachsartige Polysiloxane, wie z.B. Polydimethylsiloxane, Polydiphenylsiloxane oder modifizierte Silikone, z.B. Polyester-, Polyether- und Acrylat-modifizierte Silikone.

Die Verbindung (W) wird bevorzugt in einer Menge von 0,2 bis 2,0 Gew.- %, besonders bevorzugt von 0,5 bis 1,5 Gew. - %, jeweils bezogen auf das Gesamtgewicht des pigmentierten Beschichtungsmittels und bezogen auf den Festkörpergehalt dieser Komponente (W), eingesetzt.

Vorteilhafte pigmentierte Beschichtungsmittel werden insbesondere erhalten, wenn die Teilchen (N) und die Verbindung(en) (W) in solchen Mengen eingesetzt werden, dass die Gesamtmenge an anorganischen Teilchen (N) plus Wachs und/oder wachsartiger Verbindung (W) von 0,4 bis 4,0 , besonders bevorzugt von 1,0 bis 3,0 Gew. - %, beträgt, jeweils bezogen auf das Gesamtgewicht des pigmentierten Beschichtungsmittels und bezogen auf den Festkörpergehalt dieser Komponente (W) und der Teilchen (N) ohne Stabilisator.

Vorteilhafterweise wird die Gesamtmenge an anorganischen Teilchen (N) plus Wachs und/oder wachsartiger Verbindung (W) auf den Gehalt an farbgebenden Pigmenten ohne den Gehalt an Metallicpigmenten abgestimmt. Je weniger farbgebende Pigmente das Beschichtungsmittel (P) enthält, desto höher ist Gesamtmenge an anorganischen Teilchen (N) plus Wachs und/oder wachsartiger Verbindung (W), da bei geringem Gehalt an farbgebenden Pigmenten im Allgemeinen der Flop um so wichtiger ist. Bei Beschichtungsmitteln (P), die keine Metallic- bzw. Effektpigmente enthalten, wird ebenfalls die erfindungsgemäße Kombination aus anorganischen Teilchen (N) plus Wachs und/oder wachsartiger Verbindung (W) eingesetzt, die in diesem Fall insbesondere stabilisierend wirkt, wobei hier aber im Allgemeinen geringere Gesamtmenge an anorganischen Teilchen (N) plus Wachs und/oder wachsartiger Verbindung (W) ausreichend sind.

**Pigmente**

Das Beschichtungsmittel (P) enthält außerdem mindestens ein effektgebendes Pigment, insbesondere mindestens ein Metallplättchenpigment. Zusammen mit dem oder den effektgebenden Pigmenten enthält das pigmentierte Beschichtungsmittel ggf. noch mindestens ein oder mehrere farbgebende und/oder weitere Pigmente.

Vorzugsweise wird das Pigment aus der Gruppe, bestehend aus organischen und anorganischen, farbgebenden, magnetisch abschirmenden, elektrisch leitfähigen, korrosionshemmenden, fluoreszierenden und phosphoreszierenden Pigmenten, ausgewählt. Vorzugsweise werden die farbgebenden Pigmente verwendet.

Beispiele geeigneter Effektpigmente, die auch farbgebend sein können, sind Metallplättchenpigmente, wie handelsübliche Aluminiumbronzen und handelsübliche Edelstahlbronzen, sowie nichtmetallische Effektpigmente, wie zum Beispiel Perlglanz- bzw.' Interferenzpigmente, plättchenförmige Effektpigmente auf der Basis von Eisenoxid oder flüssigkristalline Effektpigmente. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente« verwiesen.

Insbesondere werden handelsübliche Aluminiumbronzen eingesetzt. Eingesetzt werden dabei sowohl unbehandelte Typen, die beispielsweise unter dem Namen Stapa® Metallux der Firma Eckart im Handel erhältlich sind, als auch behandelte Typen, insbesondere silanisierte Typen, die beispielsweise in der WO 01/81483 beschrieben sind und beispielsweise unter dem Namen Hydrolan® der Firma Eckart im Handel erhältlich sind.

Dabei ist es vorteilhaft, dass durch die erfindungsgemäße Verwendung der Kombination aus den stabilisierten anorganischen Teilchen (N) und dem Wachs bzw. der wachsartigen Verbindung (W) auch ohne die Verwendung spezieller Aluminiumpigmente, also auch bei Verwendung der Standardtypen, Beschichtungen mit einem sehr guten Flop auch bei hohem Festkörpergehalt erreicht werden können.

Vorzugsweise weist das Metallplättchenpigment eine Dicke von 200 bis 2000 nm und insbesondere 500 bis 1500 nm, auf.

Bevorzugt hat das Metallplättchenpigment eine mittlere Teilchengröße von 10 bis 50 und insbesondere 13 bis 25 μm.

Geeignete organische und/oder anorganische farbgebende Pigmente sind die in der Lackindustrie üblicherweise eingesetzten Pigmente. Einsetzbar sind ferner auch entsprechende Farbstoffe.

Der Gehalt des Beschichtungsmittels (P) an den Pigmenten kann sehr breit variieren und richtet sich in erster Linie nach der Tiefe der Farbe und/oder der Intensität des Effekts, die eingestellt werden sollen, sowie nach der Dispergierbarkeit der Pigmente in den Beschichtungsmitteln (P). Vorzugsweise liegt der Pigmentgehalt im Falle von Unilacken, jeweils bezogen auf den Festkörpergehalt des Beschichtungsmittels (P), bei 0,5 bis 70, bevorzugt 1,0 bis 60 Gew.- %. Vorzugsweise liegt der Pigmentgehalt im Falle von Metalliclacken, jeweils bezogen auf den Festkörpergehalt des Beschichtungsmittels (P), bei 0,5 bis 40, bevorzugt 0,5 bis 35, besonders bevorzugt bei 1 bis 30 Gew.- %.

**Menge der anorganischen Teilchen (N) im Verhältnis zur Menge der Verbindung (W)**

Pigmentierte Beschichtungsmittel mit einem besonders guten Eigenschaftsprofil werden erhalten, wenn das Gewichtsverhältnis der anorganischen Teilchen (N) ohne Stabilisator (S) zu der Verbindung (W), jeweils bezogen auf den Festkörpergehalt dieser Komponenten (N) und (W), zwischen 30 : 70 und 70 : 30 , bevorzugt zwischen 40 : 60 und 60 : 40 und ganz besonders bevorzugt bei 50 : 50, liegt.

Insbesondere bei einem niedrigen Gehalt der Beschichtungsmittel an farbgebenden Pigmenten, d.h. z.B. bei silbrigen Farbtönen, wird vorteilhafterweise der Anteil an anorganischen Teilchen (N) höher gewählt, da dies die Schleiffleckenneigung positiv beeinflusst. Entsprechend wird insbesondere bei einem hohen Gehalt der Beschichtungsmittel an farbgebenden Pigmenten der Anteil an Wachs bzw. wachsartiger Verbindung (W) höher gewährt,

**Bindemittel (B)**

Das erfindungsgemäße Beschichtungsmittel (P) kann physikalisch härtend sein.

Im Rahmen der vorliegenden Erfindung bedeutet der Begriff "physikalische Härtung" die Härtung einer Schicht aus einem Beschichtungsmittel durch Verfilmung durch Lösemittelabgabe aus dem Beschichtungsmittel, wobei die Verknüpfung innerhalb der Beschichtung über Schlaufenbildung der Polymermoleküle der Bindemittel (zu dem Begriff vgl. Römpp Lexikon Lacke und Druckfarben, Georg Thieme Verlag, Stuttgart, New York, 1998, »Bindemittel«, Seiten 73 und 74) erfolgt. Oder aber die Verfilmung erfolgt über die Koaleszenz von Bindemittelteilchen (vgl. Römpp Lexikon Lacke und Druckfarben, Georg Thieme Verlag, Stuttgart, New York, 1998, »Härtung«, Seiten 274 und 275). Üblicherweise sind hierfür keine Vernetzungsmittel notwendig. Gegebenenfalls kann die physikalische Härtung durch Luftsauerstoff, Hitze oder durch Bestrahlen mit aktinischer Strahlung unterstützt werden.

Das erfindungsgemäße Beschichtungsmittel kann thermisch härtbar sein. Hierbei kann es selbstvernetzend oder fremdvernetzend sein.

Im Rahmen der vorliegenden Erfindung bezeichnet der Begriff "selbstvernetzend" die Eigenschaft eines Bindemittels, mit sich selbst Vernetzungsreaktionen einzugehen. Voraussetzung hierfür ist, dass in den Bindemitteln bereits beide Arten von komplementären reaktiven funktionellen Gruppen enthalten sind, die für eine Vernetzung notwendig sind, oder aber das Bindemittel enthält reaktive funktionelle Gruppen, die "mit sich selbst" reagieren können. Als fremdvernetzend werden dagegen solche Beschichtungsmittel bezeichnet, worin die eine Art der komplementären reaktiven funktionellen Gruppen in dem Bindemittel, und die andere Art in einem Vernetzungsmittel vorliegen. Ergänzend wird hierzu auf Römpp Lexikon Lacke und Druckfarben, Georg Thieme Verlag, Stuttgart, New York, 1998, »Härtung«, Seiten 274 bis 276, insbesondere Seite 275, unten, verwiesen.

Als Bindemittel (B) geeignet sind dabei die in Basislacken im Bereich der Automobilindustrie üblicherweise eingesetzten Bindemittel, wobei in dem Fachmann bekannter Weise über die Auswahl der Art und Menge der zur Herstellung dieser Bindemittel eingesetzten Aufbaukomponenten die Eigenschaften und damit die Eignung der Bindemittel für das erfindungsgemäße Beschichtungsmittel gesteuert wird.

Es werden vorzugsweise Bindemittel (B) mit Thio-, Hydroxyl-, N-Methylolamino-, N-Alkoxymethylamino-, Imino-, Carbamat-, Allophanat- und/oder Carboxylgruppen, bevorzugt Hydroxyl- oder Carboxylgruppen, einerseits und vorzugsweise Vernetzungsmittel (V) mit Anhydrid-, Carboxyl-, Epoxy-, blockierten Isocyanat-, Urethan-, Methylol-, Methylolether-, Siloxan-, Carbonat-, Amino-, Hydroxy- und/oder beta-Hydroxy-alkylamidgruppen, bevorzugt Epoxy-, beta-Hydroxyalkylamid-, blockierte und unblockierte Isocyanat-, Urethan- oder Alkoxymethylaminogruppen, andererseits angewandt.

Im Falle selbstvernetzender erfindungsgemäßer Beschichtungsstoffe enthalten die Bindemittel insbesondere Methylol-, Methylolether- und/oder N-Alkoxymethylaminogruppen.

Komplementäre reaktive funktionelle Gruppen, die für die Verwendung in den erfindungsgemäßen Beschichtungsstoffen besonders gut geeignet sind, sind Hydroxylgruppen einerseits und blockierte oder unblockierte Isocyanat-, Urethan- oder Alkoxymethylaminogruppen andererseits.

Die Funktionalität der Bindemittel (B) bezüglich der vorstehend beschriebenen reaktiven funktionellen Gruppen kann sehr breit variieren und richtet sich insbesondere nach der Vernetzungsdichte, die man erzielen will, und/oder nach der Funktionalität der jeweils angewandten Vernetzungsmittel (V). Beispielsweise liegt im Falle hydroxylgruppenhaltiger Bindemittel (B) die OH-Zahl vorzugsweise bei 15 bis 300, bevorzugt 20 bis 250, besonders bevorzugt 25 bis 200, ganz besonders bevorzugt 30 bis 150 und insbesondere 35 bis 120 mg KOH/g. Bevorzugt weisen die Bindemittel außerdem eine Säurezahl von 5 bis 50 mgKOH/g, insbesondere 15 bis 35 mgKOH/g auf.

Die vorstehend beschriebenen komplementären funktionellen Gruppen können nach den üblichen und bekannten Methoden der Polymerchemie in die Bindemittel (B) eingebaut werden. Dies kann beispielsweise durch den Einbau von Monomeren, die entsprechende reaktive funktionelle Gruppen tragen, und/oder mit Hilfe polymeranaloger Reaktionen geschehen.

Geeignete Bindemittel (B) weisen im Allgemeinen ein zahlenmittleres Molekulargewicht von 400 bis 5000 g/mol, auf.

Vorzugsweise werden die Bindemittel (B) in einer Menge von 15 bis 60 Gew.- %, insbesondere von 20 bis 40 Gew.- %, jeweils bezogen auf den Festkörpergehalt des Beschichtungsmittels (P) und bezogen auf den Festkörper des Bindemittels (B), eingesetzt.

Als Bindemittel (B) geeignet sind beispielsweise statistisch, alternierend und/oder blockartig aufgebaute lineare und/oder verzweigte und/oder kammartig aufgebaute (Co)Polymerisate von ethylenisch ungesättigten Monomeren, oder Polyadditionsharze und/oder Polykondensationsharze. Zu diesen Begriffen wird ergänzend auf Römpp Lexikon Lacke und Druckfarben, Georg Thieme Verlag, Stuttgart, New York, 1998, Seite 457, »Polyaddition« und »Polyadditionsharze (Polyaddukte)«, sowie Seiten 463 und 464, »Polykondensate«, »Polykondensation« und »Polykondensationsharze«, sowie Seiten 73 und 74, "Bindemittel", verwiesen.

Beispiele geeigneter (Co)Polymerisate (B) sind (Meth)Acrylat(co)polymerisate oder partiell verseifte Polyvinylester, insbesondere (Meth)-Acrylatcopolymerisate.

Beispiele geeigneter Polyadditionsharze und/oder Polykondensationsharze (B) sind Polyester, Alkyde, Polyurethane, Polylactone, Polycarbonate, Polyether, Epoxidharz-Amin-Addukte, Polyharnstoffe, Polyamide, Polyimide, Polyester-Polyurethane, Polyether-Polyurethane oder Polyester-Polyether-Polyurethane, insbesondere Polyester.

Von diesen Bindemitteln (B) weisen die (Meth)Acrylat(co)polymerisate und die Polyester, insbesondere die (Meth)Acrylat(co)polymerisate, besondere Vorteile auf und werden deshalb besonders bevorzugt verwendet.

Geeignete Polyesterharze können gesättigt oder ungesättigt, insbesondere gesättigt sein und sind beispielsweise in der EP-B-787 159, Seite 4, Zeilen 26 bis 53, beschrieben.

Geeignete Acrylatharze (B) können nach den dem Fachmann bekannten Methoden unter Verwendung olefinisch ungesättigter Monomere mit reaktiven funktionellen Gruppen, ggf. im Kombination mit Monomeren ohne reaktive funktionelle Gruppen, hergestellt werden.

Beispiele geeigneter olefinisch ungesättigter Monomere mit reaktiven funktionellen Gruppen sind

m1) Monomere, welche mindestens eine Hydroxyl-, Amino-, Alkoxy-methylamino-, Carbamat-, Allophanat- oder Iminogruppe pro Molekül tragen, wie

- Hydroxyalkylester der Acrylsäure, Methacrylsäure oder einer anderen alpha,beta-olefinisch ungesättigten Carbonsäure, die sich von einem Alkylenglykol ableiten, das mit der Säure verestert ist, oder die durch Umsetzung der alpha,beta-olefinisch ungesättigten Carbonsäure mit einem Alkylenoxid wie Ethylenoxid oder Propylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, -ethacrylat, -crotonat, -maleinat, -fumarat oder -itaconat; oder Hydroxycycloalkylester wie 1,4-Bis(hydroxymethyl)cyclohexan-, Octahydro-4,7-methano-1H-inden-dimethanol- oder Methylpropandiolmonoacrylat,-monomethacrylat,- monoethacrylat, -monocrotonat, -monomaleinat,-monofumarat oder -monoitaconat; Umsetzungsprodukte aus cyclischen Estern, wie z.B. epsilon-Caprolacton und diesen Hydroxyalkyl- oder -cycloalkylestern;

- olefinisch ungesättigte Alkohole wie Allylalkohol;

- Polyole wie Trimethyfolpropanmono- oder diallylether oder Pentaerythritmono-, -di- oder -triallylether;

- Umsetzungsprodukte aus Acrylsäure und/oder Methacrylsäure mit dem Glycidylester einer in alpha-Stellung verzweigten Monocarbonsäure mit 5 bis 18 C-Atomen je Molekül, insbesondere einer Versatic®-Säure, oder anstelle des Umsetzungsproduktes eine äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül, insbesondere einer Versatic®-Säure, umgesetzt wird;

- Aminoethylacrylat, Aminoethylmethacrylat, Allylamin oder N-Methyliminoethylacrylat;

- N,N-Di(methoxymethyl)aminoethylacrylat oder -methacrylat oder N,N-Di(butoxymethyl)aminopropylacrylat oder -methacrylat;

- (Meth)Acrylsäureamide, wie (Meth)Acrylsäureamid, N-Methyl-, N-Methylol-, N,N-Dimethylol-, N-Methoxymethyl-, N,N-Di(methoxymethyl)-, N-Ethoxymethyl- und/oder N,N-Di(ethoxyethyl)-(meth)-acrylsäureamid;

- Acryloyloxy- oder Methacryloyloxyethyl-, propyl- oder butylcarbamat oder -allophanat; weitere Beispiele geeigneter Monomere, welche Carbamatgruppen enthalten, werden in den Patentschriften US-A-3,479,328, US-A-3,674,838, US-A- 4,126,747, US-A- 4,279,833 oder US-A-4,340,497 beschrieben;

m2) Monomere, welche mindestens eine Säuregruppe pro Molekül tragen, wie

- Acrylsäure, beta-Carboxyethylacrylat, Methacrylsäure, Ethacrylsäure, Crotonsäure, Maleinsäure, Fumarsäure oder Itaconsäure;

- olefinisch ungesättigte Sulfon- oder Phosphonsäuren oder deren Teilester;

- Maleinsäuremono(meth)acryloyloxyethylester, Bernsteinsäuremono(meth)acryloyloxyethylester oder Phthalsäuremono(meth)acryloyloxyethylester; oder

- Vinylbenzoesäure (alle Isomere), alpha-Methylvinylbenzoesäure (alle Isomere) oder Vinylbenzolsulfonsäure (alle Isomere).

m3) Epoxidgruppen enthaltende Monomere, wie der Glycidylester der Acrylsäure, Methacrylsäure, Ethacrylsäure, Crotonsäure, Maleinsäure, Fumarsäure oder Itaconsäure oder Allylglycidylether.

Höherfunktionelle Monomere der vorstehend beschriebenen Art werden im Allgemeinen in untergeordneten Mengen eingesetzt. Im Rahmen der vorliegenden Erfindung sind unter untergeordneten Mengen an höherfunktionellen Monomeren solche Mengen zu verstehen, welche nicht zur Vernetzung oder Gelierung der Copolymerisate (B), insbesondere der (Meth)Acrylatcopolymerisate (B), führen.

Beispiele geeigneter olefinisch ungesättigter Monomere (m4) ohne reaktive funktionelle Gruppen sind u.a. Alkylester der Acrylsäure, Methacrylsäure oder einer anderen alpha,beta-olefinisch ungesättigten Carbonsäure, vinylaromatische Verbindungen sowie Mischungen dieser Monomeren.

Geeignet als Bindemittel sind außerdem Polyurethanharze. Die Polyurethanharze werden in den Fachmann bekannter Weise erhalten durch Umsetzung

- mindestens eines Polyols, ausgewählt aus der Gruppe, bestehend aus Polyester- und Polyetherpolyolen, bevorzugt mit einem zahlenmittleren Molekulargewicht von 400 bis 5.000, und

- mindestens eines Polyisocyanates sowie

- gegebenenfalls mindestens einer Verbindung, enthaltend mindestens eine isocyanatreaktive funktionelle Gruppe und mindestens eine (potentiell) anionische Gruppe im Molekül

- gegebenenfalls mindestens einer weiteren Verbindung, enthaltend mindestens eine isocyanatreaktive funktionelle Gruppe und

- gegebenenfalls mindestens einer Verbindung eines zahlenmittleren Molekulargewichts von 60 bis 600 Dalton, enthaltend Hydroxyl- und/oder Aminogruppen im Molekül

Derartige Polyurethanharze sind beispielsweise in der EP-B-228 003 und der EP-B-574 417 beschrieben.

Derartige Polyurethanharze werden beispielsweise erhalten, indem als Isocyanatkomponente im Bereich der Lackindustrie üblicherweise eingesetzte Isocyanate, wie z.B. Hexamethylendiisocyanat, Octamethylendiisocyanat, De-camethylendiisocyanat, Dodecamethylendiisocyanat, Tetradecamethylendiisocyanat, Trimethylhexandiisocyanat, Te-

tramethylhexandiisocyanat, Isophorondiisocyanat, 2-Isocyanatopropylcyclohexylisocyanat, Dicyclohexylmethan-2,4'-diisocyanat, Dicyclohexylmethan-4,4'-diisocyanat, 1,4- oder 1,3-Bis(isocyanatomethyl)cyclohexan, 1,4-oder 1,3- oder 1,2-Diisocyanatocyclohexan, 2,4- oder 2,6-Diisocyanato-1-methylcyclohexan, Diisocyanate, abgeleitet von Dimerfettsäuren, wie sie unter der Handelsbezeichnung DDI 1410 von der Firma Henkel vertrieben werden, 1,8-Diisocyanato-4-isocyanatomethyl-oktan, 1,7-Diisocyanato-4-isocyanatomethyl-heptan oder 1-Isocyanato-2-(3-isocyanatopropyl)-cyclohexan oder Tetramethylxylylendiisocyanaten (TMXDI) oder Mischungen aus diesen Polyisocyanaten, bevorzugt Tetramethylxylylendiisocyanaten (TMXDI) und/oder Isophorondiisocyanat, bevorzugt Isophorondiisocyanat, verwendet werden.

Als Kettenverlängerungsmittel mit Hydroxyl- bzw. Aminogruppen werden bevorzugt Trimethylolpropan und Diethanolamin eingesetzt.

Zusammen oder anstelle der genannten Polyurethanharze sind als Bindemittel in den pigmentierten Beschichtungsmitteln auch sogenannte acrylierte Polyurethanharze geeignet, die in dem Fachmann bekannter Weise erhältlich sind, indem ethylenisch ungesättigte Monomere in Gegenwart eines Polyurethanharzes polymerisiert werden. Dabei ist es möglich, Polyurethanharze ohne Doppelbindungen und/oder Polyurethanharze mit Doppelbindungen einzusetzen.

Als Bindemittel (B) können auch acrylierte Polyurethanharze mit seitenständigen und/oder endständigen Doppelbindungen, insbesondere mit seiten- und/oder endständigen Ethenylarylengruppen, eingesetzt werden.

Die acrylierten Polyurethanharze mit seitenständigen und/oder endständigen Doppelbindungen können erhalten werden durch Umsetzung eines Polyurethanpräpolymers (I-1), das mindestens eine freie Isocyanatgruppe enthält, mit einer Verbindung (I-2), die mindestens eine ethylenisch ungesättigte Doppelbindung und eine gegenüber NCO-Gruppen reaktive Gruppe, insbesondere eine Hydroxylgruppe oder eine Aminogruppe, aufweist.

Die acrylierten Polyurethanharze mit seitenständigen und/oder endständigen Doppelbindungen können auch erhalten werden durch Umsetzung eines Polyurethanpräpolymers (II-1), das mindestens eine gegenüber NCO-Gruppen reaktive Gruppe, insbesondere mindestens eine Hydroxylgruppe oder eine Aminogruppe, enthält, mit einer Verbindung (II-2), die mindestens eine ethylenisch ungesättigte Doppelbindung und eine freie Isocyanatgruppe aufweist.

Als Bindemittel (B) eingesetzt werden außerdem Propfmischpolymerisate, die erhältlich sind durch Polymerisation von olefinisch ungesättigten Monomeren in Gegenwart der acrylierten Polyurethanharze mit seitenständigen und/oder endständigen Doppelbindungen.

Insbesondere werden Pfropfmischpolymerisate, die einen hydrophoben Kern aus mindestens einem einpolymerisierten olefinisch ungesättigten Monomeren und eine hydrophile Schale aus mindestens einem hydrophilen acrylierten Polyurethan umfassen, eingesetzt. Geeignet sind aber auch Pfropfmischpolymerisate, die einen hydrophoben Kern aus mindestens einem hydrophoben acrylierten Polyurethan und eine hydrophile Schale aus mindestens einem einpolymerisierten olefinisch ungesättigten Monomeren umfassen.

Geeignete acrylierte Polyurethanharze sowie daraus hergestellte Propfmischpolymerisate sind beispielsweise in der WO01/25307, Seite 5, Zeile 14, bis Seite 45, Zeile 4, und der EP-B-787 159, Seite 2, Zeile 27, bis Seite 7, Zeile 13, beschrieben.

Die beschriebenen Polyurethanharze können ggf. in Kombination mit einem oder mehreren Polyacrylatharzen und/oder mit einem oder mehreren Polyesterharzen eingesetzt werden.


## Polymermikroteilchen (M)

Vorteilhafterweise werden in den erfindungsgemäßen Beschichtungsmitteln (P) noch Polymermikroteilchen eingesetzt. Geeignete Polymermikroteilchen sind beispielsweise in der EP-A-480 959, Seite 3, Zeile 36, bis Seite 4, Zeile 35, der WO 96/24619, der WO 99/42529, der EP-B-1 173 491, EP-B-1 185 568, WO 03/089487, WO 03/089477, WO 01/72909 und WO 99/42531 beschrieben. Die Polymermikroteilchen können insbesondere zur Steuerung des Verlaufs, des Abdunstverhaltens und des Anlöseverhaltens durch den Klarlack eingesetzt werden.

Geeignete Polymermikroteilchen weisen üblicherweise ein zahlenmittleres Molekulargewicht von 2.000 bis 100.000 auf.

Geeignete Polymermikroteilchen weisen außerdem üblicherweise eine mittlere Teilchengröße von 0,01 bis 10 $\mu$m, insbesondere von 0,01 bis 5 $\mu$m, und ganz besonders bevorzugt von 0,02 bis 2 $\mu$m auf.

Besonders bevorzugt eingesetzte Polymermikroteilchen weisen reaktive funktionelle Gruppen auf, die mit den funktionellen Gruppen des Vernetzers reagieren können. Insbesondere weisen die Polymermikroteilchen dabei Hydroxylgruppen auf. Hierbei weisen die Polymermikroteilchen bevorzugt eine Hydroxylzahl von 5 bis 150 mgKOH/g auf. Hydroxylgruppenhaltige Polymermikroteilchen sind beispielsweise in der WO 01/72909 beschrieben.

Vernetzte Polymermikroteilchen sind beispielsweise dadurch erhältlich, indem ein Gemisch aus

(a) einem ethylenisch ungesättigten Monomeren, das eine ethylenisch ungesättigte Gruppe pro Molekül enthält oder ein Gemisch aus solchen Monomeren und

(b) einem ethylenisch ungesättigten Monomeren, das mindestens zwei ethylenisch ungesättigte Gruppen pro Molekül enthält oder ein Gemisch aus solchen Monomeren

in einer wäßrigen Phase ggf. in Gegenwart von Emulgatoren oder ggf. in Gegenwart eines Trägerharzes polymerisiert und die auf diese Weise erhaltene wäßrige Polymermikroteilchendispersion anschließend in ein organisches Lösemittel oder ein Gemisch aus organischen Lösemitteln überführt wird.

Bevorzugt sind Polymermikroteilchen, die unter Verwendung von ionische und/oder polare Gruppen, vorzugsweise Hydroxylgruppen und/oder Carboxylgruppen enthaltenden Komponenten hergestellt worden sind. Die Komponenten (a) und (b) sollen in der Regel zwischen 1 und 20, bevorzugt zwischen 3 und 15 Gew.- %, ionische und/oder polare Gruppen enthalten.

Um ausreichend vernetzte Polymermikroteilchen zu erhalten, reicht es in der Regel aus, auf ein Mol der Komponente (a) 0,25 bis 1,2 Mol, bevorzugt 0,3 bis 1 Mol der Komponente (b) einzusetzen.

Die in den erfindungsgemäßen Beschichtungsmitteln (P) eingesetzten Polymermikroteilchen (M) können aber auch direkt in organischer Phase hergestellt werden.

Bevorzugt eingesetzte Polymermikroteilchen sind beispielsweise dadurch erhältlich, indem ein Gemisch aus

(c) einem ethylenisch ungesättigten Monomeren (mi), das mindestens eine reaktive Gruppe (G1) pro Molekül enthält oder ein Gemisch aus solchen Monomeren (mi) und

(d) ggf. einem ethylenisch ungesättigten Monomeren (mii), das mindestens eine, von (G1) verschiedene, reaktive Gruppe (G2) pro Molekül enthält oder ein Gemisch aus solchen Monomeren (mii) und

(e) ggf. einem weiteren ethylenisch ungesättigten Monomeren (miii) oder ein Gemisch aus solchen Monomeren (miii)

einer Polymerisation in einem organischen Lösemittel ggf. in Gegenwart eines Trägerharzes unterworfen wird.

Geeignete Monomere (mi) sind beispielsweise Monomere, die Hydroxylgruppen, Carbamatgruppen, Aminogruppen, Alkoxymethyl-aminogruppen, Allophanatgruppen oder Iminogruppen, insbesondere Hydroxylgruppen, enthalten.

Die Monomeren (mi) mit den reaktiven Gruppen (G1) können dabei auch durch Reaktion zweier Verbindungen, von denen eine Verbindung (a) eine reaktive Gruppe (a) und mindestens eine ethylenisch ungesättigte Doppelbindung und die andere Verbindung (b) eine mit den Gruppen (a) reaktive Gruppe (b) und ggf. mindestens eine ethylenisch ungesättigte Doppelbindung aufweist, hergestellt werden.

Geeignete Monomere (mii) sind beispielsweise Monomere, die Carboxylgruppen enthalten.

Geeignete Monomere (miii) sind die üblicherweise eingesetzten, sogenannten Neutralmonomere, also ethylenisch ungesättigte Monomere, die keine reaktiven Gruppen aufweisen.

Beispiele für geeignete Monomere (mi) bis m(iii) sind die bereits bei der Beschreibung der Bindemittel aufgeführten Monomeren (m1) bis (m3).

Die Polymermikroteilchen (M) werden in den erfindungsgemäßen Beschichtungsmitteln üblicherweise in einer Menge von 3 bis 25 Gew.- %, insbesondere von 10 bis 20 Gew.- %, jeweils bezogen auf den Festkörpergehalt des Beschichtungsmittels (P) und den Festkörpergehalt der Polymermikroteilchen (M), eingesetzt.

Besonders bevorzugte Beschichtungsmittel (P) werden erhalten, wenn die Beschichtungsmittel die anorganischen Teilchen (N), das Wachs bzw. wachsartige Verbindung (W) und die Polymermikroteilchen (M) in einer solchen Menge enthalten, dass das Verhältnis aus

(I) der Menge aus anorganischen Teilchen (N) plus Wachs bzw. wachsartiger Verbindung (W) und

(II) der Menge an Polymermikroteilchen (M)

zwischen 1,0 zu 1,0 bis 1,0 zu 6,0, besonders bevorzugt zwischen 1,0 zu 2,0 bis 1,0 zu 4,0, liegt, jeweils bezogen auf den Festkörpergehalt des Beschichtungsmittels (P), den Festkörpergehalt der Komponente (N) ohne den Stabilisator (S), den Festkörpergehalt des Wachses bzw. der wachsartigen Verbindung (W) und den Festkörpergehalt der Polymermikroteilchen (M).

**Organische Lösemittel (E)**

Der Gehalt des Beschichtungsmittels (P) an Lösemittel (E) beträgt im Allgemeinen, jeweils bezogen auf das Gesamtgewicht des Beschichtungsmittels, (P), 30 bis 70, bevorzugt 38 bis 65 Gew.- %.

Durch die erfindungsgemäße Kombination aus (I) mindestens einem anorganischen Teilchen (N), das zumindest teilweise mit dem Stabilisator (S) modifiziert ist, und (II) mindestens einem Wachs und/oder mindestens einer wachsartigen Verbindung (W) werden überraschenderweise pigmentierte Beschichtungsmittel erhalten, die auch bei Spritzviskosität einen recht hohen Festkörpergehalt aufweisen und die zu den Beschichtungen mit den guten Eigenschaften, insbesondere Flop, führen.

Bevorzugte pigmentierte Beschichtungsmittel (P) weisen daher bei 23°C eine Viskosität von 16 s bis 35 s, bevorzugt 18 bis 25 s, Auslaufzeit im Ford 3 Cup und einen Festkörpergehalt von mindestens 35 Gew.- % auf. In der vorliegenden Anmeldung wird dies im Allgemeinen als "Spritzviskosität" bezeichnet.

Als Lösemittel (E) geeignet sind alle üblicherweise in der Lackindustrie eingesetzten Lösemittel, beispielsweise Alkohole, Glykolether, Ester, Etherester und Ketone, aliphatische und/oder aromatische Kohlenwasserstoffe, wie beispielsweise Aceton, Methylisobutylketon, Methylethyl-keton, Butylacetat, 3-Butoxy-2-propanol, Ethylethoxypropionat, Butyl-glykol, Butylglykolacetat, Butanol, Dipropylenglykolmethylether, Glykolsäurebutylester, Xylol, Toluol, Shellsol ® T, Pine Oel 90/95, Solventnaphtha ®, Shellsol ® A, Solvesso, Benzin 135/180 u.ä.

## Vernetzungsmittel (V)

Der Gehalt des Beschichtungsmittels (P) an Vernetzungsmittel (V) beträgt im Allgemeinen, jeweils bezogen auf den Festkörpergehalt des Beschichtungsmittels (P) und den Festkörper des Vernetzungsmittels (V), bis zu 60 Gew.- %, insbesondere 11,5 bis 60, 0 Gew.- %, bevorzugt 20 bis 50 Gew.- %.

Als ggf. eingesetztes Vernetzungsmittel können die pigmentierten Beschichtungsmittel freie Isocyanate oder blockierte Isocyanate und/oder Aminoplastharze enthalten.

Als Isocyanat kommen dabei prinzipiell die bei der Beschreibung der als Bindemittel (B) geeigneten Polyurethanharze genannten, im Bereich der Lackindustrie üblicherweise eingesetzte Isocyanate in Betracht, bevorzugt TACT und Dimethylpyrazol-blockiertes trimeres Hexamethylendiisocyanat sowie im Falle der 2-Komponenten-Beschichtungsmittel trimeres Hexamethylendiisocyanat.

Als Blockierungsmittel kommen alle üblicherweise eingesetzten Blockierungsmittel, wie die entsprechenden Alkohole, Amine, Ketone, Pyrazole u.a. in Frage, bevorzugt Blockierungsmittel mit einer Deblockierungstemperatur kleiner 130 °C.

Geeignet sind prinzipiell die im Bereich der Lackindustrie üblicherweise eingesetzten Aminoplastharze, wobei über die Reaktivität der Aminoplastharze die Eigenschaften der pigmentierten Beschichtungsmittel gesteuert werden können. Bevorzugt werden mit Methanol und/oder Butanol veretherte Aminoplastharze, beispielsweise die im Handel unter den Bezeichnungen Cymel®, Resimene®, Maprenal® und Luwipal® erhältlichen Produkte, insbesondere Maprenal® MF 900 und Resimene® 755, eingesetzt.

## Weitere Hilfs- und Zusatzstoffe (Z)

Außer den vorstehend beschriebenen Komponenten kann das Beschichtungsmittel (P) übliche und bekannte Hilfs- und Zusatzstoffe (Z) in üblichen Mengen, bevorzugt 0 bis 40 Gew.- %, insbesondere 0,5 bis 30 Gew.- %, bezogen auf das Gesamtgewicht des Beschichtungsmittels (P), enthalten. Beispiele für geeignete Hilfs- und Zusatzstoffe sind organische und anorganische Füllstoffe, z.B. Talkum, und/oder sowie weitere übliche Hilfs- und Zusatzstoffe, wie z.B. Katalysatoren für die Aushärtung, Lichtschutzmittel, Antioxidantien, Entlüftungsmittel, Netzmittel, Emulgatoren, Slipadditive, Polymerisationsinhibitoren, Reaktivverdünner, Verlaufsmittel, Flammschutzmittel, Haftvermittler, Korrosionsinhibitoren, Rieselhilfen, Sikkative, Bioziden u.ä.

## Erfindungsgemäße Mehrschichtlackierungen

## Transparentes Beschichtungsmittel (K)

Zur Herstellung der erfindungsgemäßen Mehrschichtlackierung sind alle üblicherweise eingesetzten transparenten Beschichtungsmittel geeignet, wie beispielsweise üblicherweise eingesetzte wässrige oder lösemittelhaltige transparente Beschichtungsmittel, die sowohl als Einkomponenten- als auch als Zwei- oder Mehrkomponenten-Beschichtungsmittel formuliert sein können. Geeignet sind ferner auch Pulverslurry-Klarlacke. Die eingesetzten transparenten Beschichtungsmittel können thermisch und/oder mittels Strahlung, insbesondere mittels UV-Strah**lung,** härtbar sein.

Die transparenten Beschichtungsmittel enthalten üblicherweise mindestens ein Bindemittel mit funktionellen Gruppen sowie mindestens einen Vernetzer mit einer zu den funktionellen Gruppen des Bindemittels komplementären Funktionalität. Beispiele für solche komplementären Funktionalitäten sind insbesondere Carboxyl/Epoxy, Amin oder Thiol oder Hydroxyl/blockiertes oder freies Isocyanat oder alkoxylierte Aminogruppen oder umesterungsfähige Gruppen, (Meth)Acryloyl/CHacide oder Amin oder Hydroxyl oder Thiol, Carbamat/ alkoxylierte Aminogruppen und (Meth)Acryloyl/(Meth)Acryloyl.

Eingesetzt werden insbesondere transparente Beschichtungsmittel auf Basis von Polyurethanharzen und/oder Polyacrylatharzen und/oder Polyesterharzen, bevorzugt mit Hydroxyl-, Amino-, Carbamat-, Carboxyl-, (Meth)acryloyl- und/oder Thiolgruppen in Kombination mit den entsprechenden Vernetzern, insbesondere in Kombination mit Isocyanaten, Aminoplastharzen, Anhydriden u.ä.

Neben dem Bindemittel und Vernetzer enthalten die transparenten Beschichtungsmittel übliche Hilfs- und Zusatzstoffe, wie beispielsweise Katalysatoren für die Vernetzung, Entschäumer, Haftvermittler, Additive zur Verbesserung der Untergrundbenetzung, Additive zur Verbesserung der Oberflächenglätte, Mattierungsmittel, Lichtschutzmittel, vorzugsweise die oben beschriebenen UV-Absorber mit einem Absorptionsmaximum unter 370 nm und/oder HALS, Korrosionsinhibitoren, Biozide, Flammschutzmittel oder Polymerisationsinhibitoren, wie sie in dem Buch "Lackadditive" von Johan Bielemann, Wiley-VCH, Weinheim, New York, 1998, im Detail beschrieben werden.

**Verfahren zur Herstellung der Lackierung**

Die erfindungsgemäße Lackierung, insbesondere Mehrschichtlackierung kann auf beliebige Substrate aufgebracht werden. Die Substrate können aus den unterschiedlichsten Materialien und Kombinationen von Materialien aufgebaut sein. Vorzugsweise bestehen sie aus Metallen, Kunststoffen, Glas, Holz, Leder, Textil, Keramik oder Naturstein, bevorzugt aus Metallen, Kunststoffen und Glas, insbesondere aus Metallen und Kunststoffen.

Die Substrate sind üblicherweise mit einer Grundierung und ggf. einem Füller versehen, die mit den üblichen Verfahren, wie Elektrotauchlackierung, Tauchen, Rakeln, Spritzen, Walzen o.ä., appliziert werden. Bevorzugt wird die Grundierung zumindest teilweise oder vollständig ausgehärtet, ehe das pigmentierte Beschichtungsmittel appliziert wird. Die Aushärtung der Grundierung bzw. des Füllers erfolgt üblicherweise durch Erhitzen auf eine Temperatur zwischen 80 und 170 °C für eine Zeit von 3 bis 30 min.

Das ggf. aufgebrachte transparente Beschichtungsmittel (K) wird ebenso wie das pigmentierte Beschichtungsmittel (P) mittels üblicher Verfahren zur Applikation von flüssigen Beschichtungsmitteln, wie beispielsweise Tauchen, Rakeln, Spritzen, Walzen o.ä., insbesondere aber mittels Spritzen, appliziert. Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air - Heißspritzen. Es ist auch möglich, das pigmentierte Beschichtungsmittel in einem ersten Auftrag durch ESTA und einem zweiten Auftrag pneumatisch zu applizieren.

Sofern noch ein transparentes Beschichtungsmittel (K) appliziert wird, wird die pigmentierte Beschichtung kurz abgelüftet oder kurz getrocknet, im Allgemeinen bei einer Temperatur zwischen 30 und kleiner 100 °C für eine Zeit von 1 bis 15 min. Danach wird das transparente Beschichtungsmittel appliziert.

Die applizierte pigmentierte Schicht und die ggf. applizierte transparente Schicht werden gemeinsam thermisch gehärtet. Sofern das transparente Beschichtungsmittel (K) auch noch mit aktinischer Strahlung härtbar ist, erfolgt noch eine Nachhärtung durch Bestrahlung mit aktinischer Strahlung.

Die Aushärtung kann nach einer gewissen Ruhezeit erfolgen. Sie kann eine Dauer von 30 Sekunden bis 2 Stunden, vorzugsweise 1 Minute bis 1 Stunde und insbesondere 1 bis 45 Minuten haben. Die Ruhezeit dient beispielsweise zum Verlauf und zur Entgasung der Lackschichten oder zum Verdunsten von flüchtigen Bestandteilen. Die Ruhezeit kann durch die Anwendung erhöhter Temperaturen bis 90 °C und/oder durch eine reduzierte Luftfeuchte < 10 g Wasser/kg Luft unterstützt und/oder verkürzt werden, sofern hierbei keine Schädigungen oder Veränderungen der Lackschichten eintreten, etwa eine vorzeitige vollständige Vernetzung.

Die Aushärtung erfolgt üblicherweise bei einer Temperatur zwischen 90 und 160 °C während einer Zeit von 15 bis 90 min.

Für die Trocknung bzw. Konditionierung der nassen pigmentierten Beschichtung sowie ggf. der nassen transparenten Beschichtung werden bevorzugt thermische und/oder Konvektionsverfahren verwendet, wobei übliche und bekannte Vorrichtungen, wie Durchlauföfen, NIR- und IR-Heizstrahler, Gebläse und Blastunnel, eingesetzt werden. Diese Vorrichtungen können auch miteinander kombiniert werden.

Bei den erfindungsgemäßen Mehrschichtlackierungen weist die pigmentierte Beschichtung im Allgemeinen eine Trockenfilmschichtdicke von 3 bis 40 $\mu$m, bevorzugt von 5 bis 30 $\mu$m ,und insbesondere 7 bis 20 $\mu$m, und - falls vorhanden - die transparente Beschichtung (K) im Allgemeinen eine Trockenfilmschichtdicke von 10 bis 120 $\mu$m, bevorzugt von 30 bis 80 $\mu$m, insbesondere 40 bis 70 $\mu$m, auf.

**Verwendung der Mehrschichtlackierung**

Die erfindungsgemäßen Lackierungen, insbesondere Mehrschichtlackierungen werden insbesondere im Bereich der Automobilserienlackierung, aber auch im Bereich der Nutzfahrzeug- und der Autoreparatur- Lackierung eingesetzt, und zwar für die Beschichtung von Kraftfahrzeugkarossen oder von Karosserie-Innenbauteilen oder Karosserie-Außenbauteilen. Sie sind aber auch für andere Bereiche geeignet, wie beispielsweise für die Beschichtung von Bauteilen für den Schiff- und Flugzeugbau oder von Bauteilen für Haushalts- und Elektrogeräte oder deren Teilen, von Formteilen oder Folien, von Bauwerken im Innen- und Außenbereich; von Möbeln, Fenstern und Türen, von industriellen Kleinteilen, von Coils, Containern und Emballagen, von optischen, elektrotechnischen und mechanischen Bauteilen sowie Gegenständen des täglichen Bedarfs.

Gegenstand der vorliegenden Erfindung ist auch ein Verfahren zur Herstellung von effektgebenden Mehrschichtlackierungen, bei dem man

I. auf ein Substrat eine lösemittelhaltiges effektpigmenthaltiges Beschichtungsmittel (P) aufbringt,

II. aus dem in I) aufgebrachten Beschichtungsmittel einen Film bildet,

III. ggf. auf den aus I) gebildeten Film ein transparentes Beschich-tungsmittel aufbringt und

IV. das effektpigmenthaltige und das ggf. aufgebrachte transparente Beschichtungsmittel entweder getrennt oder gemeinsam einbrennt wobei man auf dem Substrat einen gehärteten Film erhält,

wobei das

effektpigmenthaltige Beschichtungsmittel ein oder mehrere anorganische Teilchen (N), welche eine Teilchengröße von 1 bis 800 nm, bevorzugt von 3 bis 250 nm und besonders bevorzugt von 4 bis 100 nm, aufweisen, wobei die anorganischen Teilchen (N) zumindest teilweise mit einem Stabilisator (S) modifiziert sind, der mindestens eine Gruppe (S1), die mit der Oberfläche der anorganischen Teilchen (N) in Wechselwirkung treten kann, als auch eine oder mehrere organische hydrophobe Teilstrukturen aufweist, modifiziert sind,
dadurch gekennzeichnet, dass das Beschichtungsmittel zusätzlich mindestens ein Wachs und/oder eine wachsartige Verbindung (W) enthält.

Vorzugsweise haben die resultierenden erfindungsgemäßen effektgebenden und farb- und effektgebenden Beschichtungen, insbesondere die erfindungsgemäßen Mehrschichtlackierungen, einen Flop-Index $FL_{X\text{-}Rite} > 8$ und bevorzugt > 10, jeweils berechnet nach der Formel der Firma X-Rite:

$$FL_{X\text{-}Rite} = 2{,}69 \, (L^{*}_{15^\circ} - L^{*}_{110^\circ})^{1{,}11}/(L^{*}_{45^\circ})^{0{,}86}.$$

Beispiele

### 1.1. Herstellung eines Acrylatbindemittels (B)

In einem Reaktor werden 13, 239 Gew.-Teile Solvesso 100 vorgelegt und auf 167°C (=333°F) erhitzt. Der Reaktor wird unter Druck gesetzt 0,35 bar (5 psi) und über einen Zeitraum von 4 h simultan mit einer Monomerenmischung bestehend aus 2,149 Gew.-Teilen Acrylsäure, 10,765 Gew.-Teilen Hydroxyethylacrylat, 11, 484 Gew.-Teilen 2-Ethylhexylacrylat, 11,484 Gew.-Teilen Butylacrylat und 14,353 Gew.-Teilen Styrol und einer Initiatormischung bestehend aus 0,719 Gew.-Teilen Ditert.-Butylperoxid und 11,120 Gew.-Teilen einer Lösung von Dicumylperoxid in Solvesso 100 (50%-ig), versetzt. Anschließend wird 1 h bei oben genannter Temperatur und Druck gehalten, bevor über einen Zeitraum von 1 h 21,530 Gew.-Teile Epsilon-Caprolacton zugegeben werden. Es wird auf 150°C (=302°F) abgekühlt und 1,5 h bei einem Druck von 0,35 bar (5psi) gehalten. Das Reaktionsgemisch wird abgekühlt und mit Solvesso 100 auf einen Festkörper von 75% eingestellt. Das so erhaltene Acrylatharz weist eine Säurezahl von 23 mgKOH/g und eine OH-Zahl von 73 mgKOH/g, jeweils bezogen auf den Festkörper, auf.

### 1.2. Herstellung eines Trägerharzes 1

In einem Reaktor werden 5,762 Gew.-Teile Xylol, 5,762 Gew.-Teile Toluol, 0,179 Gew.-Teile Methansulfonsäure vorgelegt und auf 104°C erhitzt. Anschließend werden 80,615 Gew.-Teile 12-Hydroxystearinsäure dem Reaktor zugefahren und bei 171 °C im Rückfluß unter Entzug des Reaktionswassers gekocht. Die Reaktion ist bei Erreichung einer Säurezahl von 35 beendet. Nach Abkühlen wird der Festkörper mit Solventnaphtha auf 80 Gew.-Teile eingestellt.

### 1.3. Herstellung von Polymermikroteilchen (M)

In einem Reaktor werden 43,16 Gew.-Teile Solventnaphtha, 0,08 Gew.-Teile N,N-Dimethylcocosamin und 1,00 Gew.-Teile Ethylacetat vorgelegt und auf 104°C erhitzt. Der Reaktor wird unter Druck von 0,69 bar(10 psi) gesetzt und innerhalb von 2 h simultan mit einer Monomerenmischung bestehend aus 27,63 Gew.-Teilen Methylmethacrylat, 3,85 Gew.-Teilen 2-Hydroxypropylmethacrylat, 0,83 Gew.-Teilen Glycidylmethacrylat, 12,81 Gew.-Teilen des oben beschriebenen Trägerharzes (1), 1,51 Gew.-Teilen Methacrylsäure und 1,52 Gew.-Teilen Octylmercaptan und einer Initiatormischung bestehend aus 2,28 Gew.-Teilen Tert.-Butylper-oxy-2-ethylhexanoat und 5,13 Gew.-Teilen Solventnaphtha versetzt. Anschließend wird 3 h bei oben genannter Temperatur und Druck gehalten, bevor abgekühlt und mit Solventnaphtha auf einen Festkörper von 41 % eingestellt wird. Die so erhaltenen Polymermikroteilchen weisen eine Säurezahl von 10 mgKOH/g und eine OH-Zahl von 48 mgKOH/g, jeweils bezogen auf den Festkörper, auf.

**1.4. Herstellung der stabilisierten anorganischen Teilchen (N)**

In einer Vorlage werden 10,00 Gew.-Teile des unter 1.1. beschriebenen Acrylatbindemittels (B), 6,00 Gew.-Teile Degussa Aerosil® 380 (handelsübliche hydrophile pyrogene Kieselsäure der Firma Degussa AG mit einer spezifischen Oberfläche (BET) von 380 $m^2$/g, einer mittleren Größe der Primärteilchen von 7 nm und einem SiO2-Gehalt von >= 99,8 Gew.- %, bezogen auf die geglühte Substanz), 41,7 Gew.-Teile Solventnaphta, 41,7 Gew.-Teile Butylacetat und 0,6 Gew.- Teile eines Fettsäureesters als Stabilisierungsmittel (S) mit einem nichtflüchtigen Anteil von 96,2 % bei 2h 130°C, einer OH-Zahl von 50 mgKOH/g und einer Säurezahl von 17,2 mgKOH/g, jeweils bezogen auf den 130°C-Fest-körpergehalt, enthaltend 6-Hydroxycapronsäure, Hydroxyvaleriansäure, Laurinsäure und Polyethylenglykol (beispielsweise das handelsübliche Benetzungsadditiv auf Basis von Fettsäueestern Solsperse® 39000 der Firma Th. Goldschmidt) gemischt und dispergiert.

**1.5. Herstellung einer Wachsdispersion (W)**

6,00 Gew.-Teile des Polyethylenwachses EVA 1 von der BASF AG (= handelsübliches Polyethylenwachs auf Basis eines Ethylen/Vinylacetat-Copolymeren mit einem Schmelzpunkt von 87 - 92 °C, einem Tropfpunkt nach Ubbelohde von ca. 95 °C und einem massenmittleren Molekulargewicht (viskosimetrisch) von ca. 6500 g/mol) und 40,00 Gew.-Teile Xylol werden unter langsames Rühren bei 100 °C gelöst. Unter weiterem Rühren läßt man die Lösung auf 70°C abkühlen und gibt langsam 54,00 Gew.-Teile Butylacetat (technisch, ca. 85%ig) zu, wobei eine erwünschte Wachsfällung beginnt. Unter weiterem Rühren läßt man die Dispersion weiter bis auf 35°C abkühlen.

**1.6. Herstellung einer Paste eines Aluminiumeffektpigmentes**

Die Paste wird aus 40 Gewichtsteilen einer handelsüblichen non-leafing Aluminiumeffektpigmentpaste vom Silberdollar-Typ mit einer mittleren Teilchengröße von 14 µm (Metallux 2192 der Firma Eckart), 45 Gewichtsteilen Butylglykolacetat und 15 Gewichtsteile des unter 1.1. beschriebenen Acrylatbindemittels (B) unter Rühren hergestellt.

**1.7. Herstellung der nicht stabilisierten anorganischen Teilchen (NV) (Vergleich)**

In einer Vorlage werden 10,00 Gew.-Teile des unter 1.1. beschriebenen Acrylatbindemittels (B), 6,00 Gew.-Teile Degussa Aerosil® 380 (handelsübliche hydrophile pyrogene Kieselsäure der Firma Degussa AG mit einer spezifischen Oberfläche (BET) von 380 $m^2$/g, einer mittleren Größe der Primärteilchen von 7 nm und einem SiO2-Gehalt von >= 99,8 Gew.- %, bezogen auf die geglühte Substanz), 41,7 Gew.-Teile Solventnaphta und 41,7 Gew.-Teile Butylacetat gemischt und dispergiert.

**2.1. Herstellung eines Metallic-Basislackes P1**

Der erfindungsgemäße Basislack P1 wurde durch Vermischen der folgenden Bestandteile in der angegebenen Reihenfolge und Homogenisieren der resultierenden Mischungen hergestellt:

19 Gew.-Teile der unter 1.5. beschriebenen Wachsdispersion

18 Gew.-Teile der unter 1.3. beschriebenen Polymermikroteilchen (M)

15,0 Gew.-Teile der unter 1.4. beschriebenen stabilisierten anorganischen Teilchen (N)

11,0 Gew.-Teile des unter 1.1. beschriebenen Bindemittels (B)

13,2 Gew.-Teile eines handelsüblichen, monomeren Hexamethoxy-methyl-Melaminharzes (Handelsprodukt Maprenal® MF 900 der Firma Surface Specialities Germany GmbH & Co. KG)

0,5 Gew.-Teile eines handelsüblichen Benetzungsadditivs auf Basis eines aminharzmodifizierten Acrylcopolymers ohne Siliconzusätze mit einer Viskosität von 150 - 280 mPa.s bei 23 °C (Kegel/Platte, Scherrate 25 s $^{-1}$ und einem Wirkstoffgehalt von 70% (Handelsprodukt Additol XL 480 der Firma Cytec Surface Specialities)

1,5 Gew.-Teile eines handelsüblichen, sauren, Amin neutralisierten Katalysators auf Basis Dodecylbenzosulfonsäure (Handelsprodukt Nacure® 5225 der Firma King Industries Speciality Chemicals)

18 Gew.-Teile der unter 1.6 beschriebenen Paste eines Aluminiumeffektpigments

3,8 Gew.-Teile Butanol

Der Basislack P1 ist lackierfertig mit einer Viskosität von 23 sec. Ford Cup 3 und einem Festkörpergehalt (1 h, 120 °C) von 39,8 %.

**2.2. Herstellung des Metallic-Basislackes PV1 (Vergleich)**

Der nicht erfindungsgemäße Basislack PV1 wurde durch Vermischen der folgenden Bestandteile in der angegebenen Reihenfolge und Homogenisieren der resultierenden Mischungen hergestellt:

32 Gew.-Teile der unter 1.5. beschriebenen Wachsdispersion

18 Gew.-Teile der unter 1.3. beschriebenen Polymermikroteilchen (M)

13,0 Gew.-Teile des unter 1.1. beschriebenen Bindemittels (B)

13,2 Gew.-Teile eines handelsüblichen, monomeren Hexamethoxymethyl-Melaminharzes (Handelsprodukt Maprenal® MF 900 der Firma Surface Specialities Germany GmbH & Co. KG)

0,5 Gew.-Teile eines handelsüblichen Benetzungsadditivs auf Basis eines aminharzmodifizierten Acrylcopolymers ohne Siliconzusätze mit einer Viskosität von 150 - 280 mPa.s bei 23 °C (Kegel/Platte, Scherrate 25 s $^{-1}$ und einem Wirkstoffgehalt von 70% (Handelsprodukt Additol XL 480 der Firma Cytec Surface Specialities)

1,5 Gew.-Teile eines handelsüblichen, sauren, Amin neutralisierten Katalysators auf Basis Dodecylbenzosulfonsäure (Handelsprodukt Nacure® 5225 der Firma King Industries Speciality Chemicals)

18 Gew.-Teile der unter 1.6 beschriebenen Paste eines Aluminiumeffektpigments

3,8 Gew.-Teile Butanol

Der Basislack PV1 ist lackierfertig mit einer Viskosität von 20 sec. Ford Cup 3 und einem Festkörpergehalt (1h, 120 °C) von 42,3 %.

**2.3. Herstellung des Metallic-Basislackes PV2 (Vergleich)**

Der nicht erfindungsgemäße Basislack PV2 wurde durch Vermischen der folgenden Bestandteile in der angegebenen Reihenfolge und Homogenisieren der resultierenden Mischungen hergestellt:

26 Gew.-Teile der unter 1.3. beschriebenen Polymermikroteilchen (M)

11 Gew.-Teile der unter 1.4. beschriebenen, stabilisierten anorganischen Teilchen (N)

15,0 Gew.-Teile des unter 1.1. beschriebenen Bindemittels (B)

15,0 Gew.-Teile eines handelsüblichen, monomeren Hexamethoxy-methyl-Melaminharzes (Handelsprodukt Maprenal® MF 900 der Firma Surface Specialities Germany GmbH & Co. KG)

0,5 Gew.-Teile eines handelsüblichen Benetzungsadditivs auf Basis eines aminharzmodifizierten Acrylcopolymers ohne Siliconzusätze mit einer Viskosität von 150 - 280 mPa.s bei 23 °C (Kegel/Platte, Scherrate 25 s $^{-1}$ und einem Wirkstoffgehalt von 70% (Handelsprodukt Additol XL 480 der Firma Cytec Surface Specialities)

1,5 Gew.-Teile eines handelsüblichen, sauren, Amin neutralisierten Katalysators auf Basis Dodecylbenzosulfonsäure (Handelsprodukt Nacure® 5225 der Firma King Industries Speciality Chemicals)

18 Gew.-Teile der unter 1.6 beschriebenen Paste eines Aluminiumeffektpigments

3,8 Gew.-Teile Butanol

Der Basislack PV2 ist lackierfertig mit einer Viskosität von 21 sec. Ford Cup 3 und einem Festkörpergehalt (1 h, 120 °C) von 40,9 %.

**2.4. Herstellung des Metallic-Basislackes PV3 (Vergleich)**

Der nicht erfindungsgemäße Basislack PV3 wurde analog zum Basislack P1 hergestellt mit dem einzigen Unterschied, dass anstelle von 15,0 Gew.-Teilen der unter 1.4. beschriebenen stabilisierten Teilchen (N) nun 15,0 Gew.-Teilen der unter 1.7. beschriebenen nichtstabilisierten Teilchen (NV) eingesetzt wurden. Der Basislack PV3 ist lackierfertig mit einer Viskosität von 23 sec. Ford Cup 3 und einem Festkörpergehalt (1 h, 120 °C) von 39,6%.

**2.5. Prüfung der Metallic-Basislacke P1, PV1, PV2 und PV3**

Von den Metallic-Basislacken P1, PV1, PV2 und PV3 wurde die Lagerstabilität durch Lagerung dieser Basislacke bei einer Temperatur von 40°C während 1 Woche mittels Messung der Auslaufsviskosität im Ford Cup 3 bei 23°C vor und nach Lagerung bestimmt. Die Ergebnisse sind in Tabelle 1 dargestellt.

**Tabelle 1:** Viskosität der Metallic-Basislacke P1, PV1, PV2 und PV3 vor und nach Lagerung von 1 Woche bei einer Temperatur von 40°C

| Basislack | Viskosität vor Lagerung | Viskosität nach Lagerung |
|---|---|---|
| P1 | 23s | 23s |
| PV1 | 20s | 20s |
| PV2 | 21s | 22s |
| PV3 | 23s | 32s |

**3.1. Herstellung der Mehrschichtlackierungen 1, V1, V2 und V3**

Für die Prüfung der anwendungstechnischen Eigenschaften der Basislacke P1, PV1, PV2 und PV3 wurden in üblicher und bekannter Weise Prüftafeln der Abmessungen 30 x 70 cm hergestellt. Hierzu wurden Stahltafeln (Karosseriebleche), die mit einer handelsüblichen und bekannten und eingebrannten kathodisch abgeschiedenen Elektrotauchlackierung (Cathoguard® 300 der Firma BASF Coatings AG) beschichtet waren, mit einem handelsüblichen konventioneller Füller auf Polyester-Basis der Firma BASF Coatings AG beschichtet, wonach die resultierenden Füllerschichten während 5 Minuten bei 20 °C und einer relativen Luftfeuchtigkeit von 65% abgelüftet und in einem Umluftofen während 30 Minuten bei 140 °C eingebrannt wurden.

Nach dem Abkühlen der Prüftafeln auf 20 °C wurden die Basislacke P1 bzw. PV1 bzw. PV2 bzw. PV3 durch ESTA - Doppelauftrag mit einer Trockenfilmschichtdicke von $18\mu$m aufgetragen. Anschließend wurden die Basislackschichten während 5 Minuten abgelüftet und mit dem handelsüblichen Einkomponenten-Klarlack Uregloss® der Firma BASF Coatings AG mit einer Trockenfilmschichtdicke von $45\mu$m überschichtet. Hiernach wurden die Basislackschichten und die Klarlackschichten während 10 Minuten bei 140 °C eingebrannt, wodurch die erfindungsgemäße effektgebende Mehrschichtlackierung des Beispiels 1 und die nicht erfindungsgemäßen Mehrschichtlackierungen der Vergleichsversuche V1, V2 und V3 resultierten.

**3.2. Prüfung der erhaltenen Mehrschichtlackierungen 1, V1, V2 und V3**

Die Mehrschichtlackierungen 1, V1, V2 und V3 wurden mit Hilfe eines Spekralphotometers der Firma X-Rite (z. B. MA48 Multi-Angle Spectrophotometer) vermessen. Aus den anhand der beiden Mehrschichtlackierungen ermittelten Helligkeitswerten für die Betrachtungswinkel 15°, 45° und 110° kann der so genannte Flop-Index nach X-Rite nach der Formel

$$FL_{X\text{-}Rite} = 2,69\ (L^*_{15°} - L^*_{110°})^{1,11} / (L^*_{45°})^{0,86}$$

berechnet werden.

Bei der Mehrschichtlackierung 1 ebenso wie bei den Mehrschichtlackierungen V1, V2 und V3 resultierte jeweils ein $FL_{X\text{-}Rite}$ = 12. Der metallische Flop war also bei allen Beschichtungen sehr gut ausgeprägt. Außerdem wurden Glanz und Haze (20°) nach DIN 67530 und der Verlauf mit dem Messgerät: Firma Byk/Gardner - Wave scan plus (Long wave = LW; short wave = SW) bestimmt. Die Rissbildung wurde visuell beurteilt. Die Messergebnisse sind in Tabelle 2 angeführt.

Die in der Tabelle 2 zusammengestellten Ergebnisse untermauern, dass die erfindungsgemäße Mehrschichtlackierung einen hervorragenden Flop-Effekt aufwies, der - wenn überhaupt - von einem sehr geringen Sparkle-Effekt begleitet war. Hieraus resultierten Farb-Metallic-Effekte von einem sehr eleganten optischen Eindruck. Es wurden so gut wie keine Wolken beobachtet. Glanz und Haze sowie der Verlauf waren ebenfalls hervorragend. Vor allen zeigte die erfindungsgemäße Mehrschichtlackierung keine Rissbildung in der Basislackierung.

**Tabelle 2:** Prüfergebisse der Mehrschichtlackierungen 1, V1 und V2

| Beisp. | $FL_{X-Rite}L^*_{15°}$ | Glanz | Haze | Rissbild. | Long Wave | Short Wave |
|---|---|---|---|---|---|---|
| 1 | 12 | 91 | 11 | keine | 10 | 25 |
| V1 | 12 | 89 | Risse | Risse | 14 | 39 |
| V2 | 12 | 90 | 42 | keine | 12 | 35 |
| V3 | 12 | 90 | 12 | keine | 11 | 24 |

Weiterhin wurde von den Mehrschichtlackierungen 1, V1, V2 und V3 das Auftreten von optischen Fehlstellen, insbesondere das Auftreten von Schleifflecken folgendermaßen geprüft:

Auf den Prüftafeln wurden mittels eines Schleifpapiers der Firma Plochmann mit einer Körnung von 800 - 1000 sowohl eine Runde als auch eine kreisförmige Schleifstelle aufgebracht. Diese Schleifstellen wurden mit den Basislacken P1 bzw. PV1 bzw. PV2 bzw. PV3 und dem in 3.1. beschriebenem Klarlack beschichtet und wie in 3.1. beschrieben getrocknet. Der jeweilige Farbtonunterschied wurde visuell beurteilt. Ferner wurde noch die Wolkenbildung visuell beurteilt. Die erhaltenen Ergebnisse sind in Tabelle 3 dargestellt.

Bedeutung der Noten:

1 Fehlstellen bzw. Wolken nicht sichtbar
2 Fehlstellen bzw. Wolken sehr schwach sichtbar
3 Fehlstellen bzw. Wolken schwach sichtbar
4 Fehlstellen bzw. Wolken deutlich sichtbar
5 Fehlstellen bzw. Wolken sehr deutlich sichtbar

Tabelle 3: Beurteilung optischer Fehlstellen und Wolken

| Beispiel | Note Schleifflecken | Wolken |
|---|---|---|
| 1 | 2 | 2 |
| V1 | 3 | 3 |
| V2 | 3 | 3 |
| V3 | 2 | 2 |

**Patentansprüche**

1. Pigmentiertes Beschichtungsmittel (P), enthaltend

(N) ein oder mehrere anorganische Teilchen (N), welche eine Teilchengrösse von 1 bis 800 nm, bevorzugt von 3 bis 250 nm und besonders bevorzugt von 4 bis 100 nm, aufweisen,
(B) ein oder mehrere Bindemittel (B),
(D) ein oder mehrere effektgebende Pigmente,
(E) ein oder mehrere organische Lösemittel (E) und
(V) ggf. ein oder mehrere Vernetzungsmittel (V),

wobei die anorganischen Teilchen (N) zumindest teilweise mit einem Stabilisator (S) modifiziert sind, der mindestens eine Gruppe (S1), die mit der Oberfläche der anorganischen Teilchen (N) in Wechselwirkung treten kann, und eine oder mehrere hydrophobe Teilstrukturen aufweist,

**dadurch gekennzeichnet, dass** das Beschichtungsmittel zusätzlich mindestens ein Wachs und/oder mindestens eine wachsartige Verbindung (W) enthält.

2. Pigmentiertes Beschichtungsmittel (P) nach Anspruch 1, **dadurch gekennzeichnet, dass** es als Wachs und/oder wachsartige Verbindung (W) modifizierte und/oder unmodifizierte Polyolefinwachse, insbesondere Polyethylenwachse, Polypropylenwachse und Polyethylenglykolwachse, und/oder Polyamidwachse und/oder Polyacrylatpolymerisate und/oder Polyacrylatcopolymerisate enthält.

3. Pigmentiertes Beschichtungsmittel (P) nach Anspruch 1 oder 2, **dadurch gekennzeichnet, dass** die Gruppen (S1) des Stabilisators ausgewählt sind aus der Gruppe Hydroxyl-, Carboxyl-, Ether, Phosphat-, Phosphonat-, Bisphosphonat, Sulfatoder Sulfonatgruppen oder stickstoffhaltiger, hydrophiler Gruppen oder Mischungen davon.

4. Pigmentiertes Beschichtungsmittel (P) nach einem der Ansprüche 1 bis 3, **dadurch gekennzeichnet, dass** die hydrophoben Teilstrukturen ausgewählt sind aus der Gruppe der Reste von gesättigten und/oder ungesättigten Fettsäuren, insbesondere der Reste von gesättigten und/oder ungesättigten Fettsäuren mit 5 bis 30 Kohlenstoffatomen im Molekül, besonders bevorzugt ausgewählt aus der Gruppe aus Hydroxyvaleriansäure, Hydroxycapronsäure, Hydroxystearinsäure, Hydroxylaurinsäure und Mischungen davon.

5. Pigmentiertes Beschichtungsmittel (P) nach einem der Ansprüche 1 bis 4, **dadurch gekennzeichnet, dass** der Stabilisator (S) Ester von Fettsäuren und/oder Ester von Dimerfettsäuren und/oder Ester von Trimerfettsäuren enthält, bevorzugt Ester von Fettsäuren und/oder Ester von Dimerfettsäuren und/oder Ester von Trimerfettsäuren mit Polyalkylenglykolen, insbesondere mit Polyalkylenglykolen mit 6 bis 20 C-Atomen.

6. Pigmentiertes Beschichtungsmittel (P) nach einem der Ansprüche 1 bis 5, **dadurch gekennzeichnet, dass** die anorganischen Teilchen (N) ausgewählt sind aus der Gruppe Siliciumoxid und/oder Aluminiumoxid.

7. Pigmentiertes Beschichtungsmittel (P) nach einem der Ansprüche 1 bis 6, **dadurch gekennzeichnet, dass** die Teilchen (N) in einer Menge von 0,2 bis 2,0 Gew.- %, bevorzugt von 0,5 bis 1 ,5 Gew. - %, und/oder das Wachs und/oder die wachsartige(n) Verbindungen) (W) in einer Menge von 0,2 bis 2,0 Gew.- %, bevorzugt von 0,5 bis 1 ,5 Gew. - %, jeweils bezogen auf das Gesamtgewicht des pigmentierten Beschichtungsmittels und den Festkörpergehalt dieser Komponenten (N) und (W) und bezogen auf das Gewicht der Komponente (N) ohne den Stabilisator (S), und/oder der Stabilisator (S) in einer Menge von 3 bis 40 Gew.- %, insbesondere von 5 bis 20 Gew.- %, jeweils bezogen auf das Gewicht der Teilchen (N) und bezogen auf den Festkörpergehalt des Stabilisators (S) und der Teilchen (N), eingesetzt werden.

8. Pigmentiertes Beschichtungsmittel (P) nach einem der Ansprüche 1 bis 7, **dadurch gekennzeichnet, dass** die Teilchen (N) und die Verbindung(en) (W) in solchen Mengen eingesetzt werden, dass die Gesamtmenge an anorganischen Teilchen (N) plus Wachs und/oder wachsartiger Verbindung (W) von 0,4 bis 4,0 , besonders bevorzugt von 1,0 bis 3,0 Gew. - %, beträgt, jeweils bezogen auf das Gesamtgewicht des pigmentierten Beschichtungsmittels und bezogen auf den Festkörpergehalt dieser Komponente (W) und der Teilchen (N) ohne Stabilisator.

9. Pigmentiertes Beschichtungsmittel (P) nach einem der Ansprüche 1 bis 8 , **dadurch gekennzeichnet, dass** die Teilchen (N) und das Wachs und/oder die Verbindung(en) (W) in solchen Mengen eingesetzt werden, dass das Gewichtsverhältnis der anorganischen Teilchen (N) ohne Stabilisator (S) zu der Verbindung (W), jeweils bezogen auf den Festkörpergehalt dieser Komponenten (N) und (W), zwischen 70 : 30 und 30 : 70 , bevorzugt zwischen 40 : 60 und 60 : 40, liegt.

10. Pigmentiertes Beschichtungsmittel (P) nach einem der Ansprüche 1 bis 9, **dadurch gekennzeichnet, dass** es zusätzlich Polymermikroteilchen (M) enthält, bevorzugt in einer Menge von 3 bis 25 Gew.-%, insbesondere von 10 bis 20 Gew.-%, jeweils bezogen auf den Festkörpergehalt des Beschichtungsmittels (P) und den Festkörpergehalt der Polymermikroteilchen (M).

11. Pigmentiertes Beschichtungsmittel (P) nach einem der Ansprüche 1 bis 10, **dadurch gekennzeichnet, dass** der Festkörpergehalt mindestens 35 Gew.- % beträgt und dass das Beschichtungsmittel (P) bei 23°C eine Viskosität von 16 s bis 35 s, bevorzugt 18 bis 25 s Auslaufzeit im Ford Cup 3 aufweist.

12. Effekt- und/oder farbgebende Lackierung aus mindestens einer pigmentierten Beschichtung und ggf. einer darauf angeordneten Klarlacklackierung, **dadurch gekennzeichnet, dass** die pigmentierte Beschichtung aus einem Beschichtungsmittel (P) nach einem der Ansprüche 1 bis 11 hergestellt worden ist.

13. Verfahren zur Herstellung der Lackierung nach Anspruch 12, bei dem mindestens eine pigmentierte Beschichtung (P) und ggf. auf die pigmentierte Beschichtung (P) mindestens eine transparente Beschichtung (K) aufgebracht wird.

14. Verfahren nach Anspruch 13, **dadurch gekennzeichnet, dass** es in der Automobilserien- und/oder Nutzfahrzeug- und/oder Reparaturlackierung, zur Beschichtung von Karosserie-Innen- oder -Aussenbauteilen oder von Bauteilen für den Schiff- und Flugzeugbau oder von Bauteilen für Haushalts- und Elektrogeräte eingesetzt wird.

**Claims**

1. Pigmented coating composition (P) comprising

   (N) one or more inorganic particles (N) which have a particle size of 1 to 800 nm, preferably of 3 to 250 nm, and more preferably of 4 to 100 nm,
   (B) one or more binders (B),
   (D) one or more effect pigments,
   (E) one or more organic solvents (E), and
   (V) if desired, one or more crosslinking agents (V),

   the inorganic particles (N) being at least partly modified with a stabilizer (S) which has
   at least one group (S1) which is able to interact with the surface of the inorganic particles (N), and
   one or more hydrophobic substructures,
   **characterized in that** the coating composition further comprises at least one wax and/or at least one waxlike compound (W).

2. Pigmented coating composition (P) according to Claim 1, **characterized in that** it comprises as wax and/or waxlike compound (W) modified and/or unmodified polyolefin waxes, especially polyethylene waxes, polypropylene waxes, and polyethylene glycol waxes, and/or polyamine waxes and/or polyacrylate polymers and/or polyacrylate copolymers.

3. Pigmented coating composition (P) according to Claim 1 or 2, **characterized in that** the groups (S1) of the stabilizer are selected from the group of hydroxyl, carboxyl, ether, phosphate, phosphonate, bisphosphonate, sulfate or sulfonate groups or nitrogen-containing hydrophilic groups or mixtures thereof.

4. Pigmented coating composition (P) according to any one of Claims 1 to 3, **characterized in that** the hydrophobic substructures are selected from the group of the radicals of saturated and/or unsaturated fatty acids, especially the radicals of saturated and/or unsaturated fatty acids having 5 to 30 carbon atoms in the molecule, selected with particular preference from the group of hydroxyvaleric acid, hydroxycaproic acid, hydroxystearic acid, hydroxylauric acid, and mixtures thereof.

5. Pigmented coating composition (P) according to any one of Claims 1 to 4, **characterized in that** the stabilizer (S) comprises esters of fatty acids and/or esters of dimer fatty acids and/or esters of trimer fatty acids, preferably esters of fatty acids and/or esters of dimer fatty acids and/or esters of trimer fatty acids with polyalkylene glycols, especially with polyalkylene glycols having 6 to 20 C atoms.

6. Pigmented coating composition (P) according to any one of Claims 1 to 5, **characterized in that** the inorganic particles (N) are selected from the group of silica and/or alumina.

7. Pigmented coating composition (P) according to any one of Claims 1 to 6, **characterized in that** the particles (N) are used in an amount of 0.2% to 2.0% by weight, preferably of 0.5% to 1.5% by weight, and/or the wax and/or the waxlike compound(s) (W) is (are) used in an amount of 0.2% to 2.0% by weight, preferably of 0.5% to 1.5% by weight, based in each case on the total weight of the pigmented coating composition and on the solids content of these components (N) and (W), and based on the weight of component (N) without the stabilizer (S), and/or the stabilizer (S) is used in an amount of 3% to 40%, in particular of 5% to 20% by weight, based in each case on the weight of the particles (N) and based on the solids content of the stabilizer (S) and of the particles (N).

8. Pigmented coating composition (P) according to any one of Claims 1 to 7, **characterized in that** the particles (N) and the compound(s) (W) are used in amounts such that the total amount of inorganic particles (N) plus wax and/or waxlike compound (W) is from 0.4% to 4.0%, more preferably from 1.0% to 3.0%, by weight, based in each case on the total weight of the pigmented coating composition and based on the solids content of this component (W) and of the particles (N) without stabilizer.

9. Pigmented coating composition (P) according to any one of Claims 1 to 8, **characterized in that** the particles (N) and the wax and/or the compound(s) (W) are used in amounts such that the weight ratio of the inorganic particles (N) without stabilizer (S) to the compound (W), in each case based on the solids content of these components (N) and (W), is between 70 : 30 and 30 : 70, preferably between 40 : 60 and 60 : 40.

10. Pigmented coating composition (P) according to any one of Claims 1 to 9, **characterized in that** it further comprises polymer microparticles (M), preferably in an amount of 3% to 25% by weight, in particular of 10% to 20% by weight, based in each case on the solids content of the coating composition (P) and on the solids content of the polymer microparticles (M).

11. Pigmented coating composition (P) according to any one of Claims 1 to 10, **characterized in that** the solids content is at least 35% by weight and **in that** the coating composition (P) has a viscosity at 23°C of 16 s to 35 s, preferably 18 to 25 s, as the efflux time in the Ford Cup 3.

12. Effect and/or color paint system comprising at least one pigmented coating and, if desired, a clearcoat system atop it, **characterized in that** the pigmented coating has been produced from a coating composition (P) according to any one of Claims 1 to 11.

13. Process for producing the paint system according to Claim 12, for which at least one pigmented coating (P) is applied and, if desired, at least one transparent coating (K) is applied to the pigmented coating (P).

14. Process according to Claim 13, **characterized in that** it is used in automotive OEM finishing and/or utility-vehicle finishing and/or refinishing, for the coating of interior or exterior bodywork components or of components for marine engineering and aircraft engineering or of components for household appliances and electrical appliances.

**Revendications**

1. Agent de revêtement pigmenté (P), contenant

   (N) une ou plusieurs particules inorganiques (N), qui présente(nt) une grosseur de particule de 1 à 800 nm, de préférence de 3 à 250 nm et de manière particulièrement préférée de 4 à 100 nm,
   (B) un ou plusieurs liants (B),
   (D) un ou plusieurs pigments conférant un effet,
   (E) un ou plusieurs solvants organiques (E) et
   (V) le cas échéant un ou plusieurs réticulants (V),

   les particules inorganiques (N) étant au moins partiellement modifiées par un stabilisant (S), qui présente au moins un groupe (S1), qui peut entrer en interaction avec la surface des particules inorganiques (N), et qui présente une ou plusieurs structures partielles hydrophobes, **caractérisé en ce que** l'agent de revêtement contient en plus au moins une cire et/ou au moins un composé de type cire (W).

2. Agent de revêtement pigmenté (P) selon la revendication 1, **caractérisé en ce qu'**il contient, comme cire et/ou composé de type cire (W) des cires polyoléfiniques modifiées et/ou non modifiées, en particulier des cires de polyéthylène, de polypropylène et de polyéthylèneglycol, et/ou des cires de polyamide et/ou des polymères de polyacrylate et/ou des copolymères de polyacrylate.

3. Agent de revêtement pigmenté (P) selon la revendication 1 ou 2, **caractérisé en ce que** les groupes (S1) du stabilisant sont choisis dans le groupe formé par les groupes hydroxyle, carboxyle, éther, phosphate, phosphonate, biphosphonate, sulfate ou sulfonate ou les groupes hydrophiles contenant de l'azote ou leurs mélanges.

4. Agent de revêtement pigmenté (P) selon l'une quelconque des revendications 1 à 3, **caractérisé en ce que** les structures partielles hydrophobes sont choisies dans le groupe des radicaux d'acides gras saturés et/ou insaturés, en particulier des radicaux d'acides gras saturés et/ou insaturés comprenant 5 à 30 atomes de carbone dans la molécule, de manière particulièrement préférée choisies dans le groupe formé par l'acide hydroxyvalérianique, l'acide hydroxycaproïque, l'acide hydroxystéarique, l'acide hydroxylaurique et leurs mélanges.

**5.** Agent de revêtement pigmenté (P) selon l'une quelconque des revendications 1 à 4, **caractérisé en ce que** le stabilisant (S) contient des esters d'acides gras et/ou des esters d'acides gras dimères et/ou des esters d'acides gras trimères, de préférence des esters d'acides gras et/ou des esters d'acides gras dimères et/ou des esters d'acides gras trimères avec des polyalkylèneglycols, en particulier avec des polyalkylèneglycols comprenant 6 à 20 atomes de carbone.

**6.** Agent de revêtement pigmenté (P) selon l'une quelconque des revendications 1 à 5, **caractérisé en ce que** les particules inorganiques (N) sont choisies dans le groupe formé par l'oxyde de silicium et/ou l'oxyde d'aluminium.

**7.** Agent de revêtement pigmenté (P) selon l'une quelconque des revendications 1 à 6, **caractérisé en ce que** les particules (N) sont utilisées en une quantité de 0,2 à 2,0% en poids, de préférence de 0,5 à 1,5% en poids, et/ou la cire et/ou le(s) composé(s) de type cire (W) est/sont utilisé(e)(s) en une quantité de 0,2 à 2,0% en poids, de préférence de 0,5 à 1,5% en poids, à chaque fois par rapport au poids total de l'agent de revêtement pigmenté et à la teneur en solides de ces composants (N) et (W) et par rapport au poids du composant (N) sans stabilisant (S), et/ou le stabilisant (S) est utilisé en une quantité de 3 à 40% en poids, en particulier de 5 à 20% en poids, à chaque fois par rapport au poids des particules (N) et par rapport à la teneur en solides du stabilisant (S) et des particules (N).

**8.** Agent de revêtement pigmenté (P) selon l'une quelconque des revendications 1 à 7, **caractérisé en ce que** les particules (N) et le(s) composé(s) (W) sont utilisés en des quantités telles que la quantité totale de particules inorganiques (N) plus cire et/ou composé de type cire (W) est de 0,4 à 4,0% en poids, de manière particulièrement préférée de 1,0 à 3,0% en poids, à chaque fois par rapport au poids total de l'agent de revêtement pigmenté et par rapport à la teneur en corps solides de ce composant (W) et des particules (N) sans stabilisant.

**9.** Agent de revêtement pigmenté (P) selon l'une quelconque des revendications 1 à 8, **caractérisé en ce que** les particules (N) et la cire et/ou le(s) composé(s) (W) sont utilisés en des quantités telles que le rapport pondéral des particules inorganiques (N) sans stabilisant (S) au composé (W), à chaque fois par rapport à la teneur en solides de ces composants (N) et (W), est situé entre 70:30 et 30:70, de préférence entre 40:60 et 60:40.

**10.** Agent de revêtement pigmenté (P) selon l'une quelconque des revendications 1 à 9, **caractérisé en ce qu'**il contient en outre des microparticules de polymère (M), de préférence en une quantité de 3 à 25% en poids, en particulier de 10 à 20% en poids, à chaque fois par rapport à la teneur en solides de l'agent de revêtement (P) et à la teneur en solides des microparticules de polymère (M).

**11.** Agent de revêtement pigmenté (P) selon l'une quelconque des revendications 1 à 10, **caractérisé en ce que** la teneur en solides est d'au moins 35% en poids et **en ce que** l'agent de revêtement (P) présente, à 23°C, une viscosité de 16 s à 35 s, de préférence un temps d'écoulement de 18 à 25 s dans une coupe de Ford 3.

**12.** Laquage conférant un effet et/ou une couleur constitué par au moins un revêtement pigmenté et le cas échéant un laquage de laque claire disposé sur celui-ci, **caractérisé en ce que** le revêtement pigmenté a été préparé à partir d'un agent de revêtement (P) selon l'une quelconque des revendications 1 à 11.

**13.** Procédé pour la réalisation d'un laquage selon la revendication 12, dans lequel on applique au moins un revêtement pigmenté (P) et le cas échéant au moins un revêtement transparent (K) sur le revêtement pigmenté (P).

**14.** Procédé selon la revendication 13, **caractérisé en ce qu'**il est utilisé dans le laquage de séries de voitures et/ou de véhicules utilitaires et/ou de réparation, pour le revêtement de pièces intérieures ou extérieures de carrosserie ou de pièces pour la construction de bateaux et d'avions ou de pièces pour les appareils domestiques et électriques.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 4522958 A
- US 4677004 A
- US 4652470 A
- US 4680204 A
- EP 1204701 B
- EP 0687715 A
- DE 10129899 A
- WO 0181483 A
- EP 787159 B
- US 3479328 A
- US 3674838 A
- US 4126747 A
- US 4279833 A
- US 4340497 A
- EP 228003 B
- EP 574417 B
- WO 0125307 A
- EP 480959 A
- WO 9624619 A
- WO 9942529 A
- EP 1173491 B
- EP 1185568 B
- WO 03089487 A
- WO 03089477 A
- WO 0172909 A
- WO 9942531 A

### In der Beschreibung aufgeführte Nicht-Patentliteratur

- Ullmanns Enzyklopädie der technischen Chemie. Verlag Chemie, 1983, 3
- Römpp Lexikon Lacke und Druckfarben. Georg Thieme Verlag, 1998, 176, 380, 381
- Bindemittel. Römpp Lexikon Lacke und Druckfarben. Georg Thieme Verlag, 1998, 73, 74
- Härtung. Römpp Lexikon Lacke und Druckfarben. Georg Thieme Verlag, 1998, 274, 275
- Härtung. Römpp Lexikon Lacke und Druckfarben. Georg Thieme Verlag, 1998, 274, 276
- Römpp Lexikon Lacke und Druckfarben. Georg Thieme Verlag, 1998, 457, 463, 464
- **VON JOHAN BIELEMANN.** Lackadditive. Wiley-VCH, 1998